# EUROPÄISCHE PATENTANMELDUNG

(11) **EP 2 154 761 A1**
(43) Veröffentlichungstag der Anmeldung: **17.02.2010**
(21) Anmeldenummer: 09405106.7
(22) Anmeldetag: 01.07.2009
(51) Int. Cl.: H02G 3/18, A47B 21/06

(54) **Kabelführung an einem Tisch**

(30) Priorität: 15.08.2008 CH 12932008
(71) Anmelder: Vitra Patente AG, 4132 Muttenz (CH)
(72) Erfinder: Bräuning, Egon, 79576 Weil am Rhein (DE)
(74) Vertreter: Ullrich, Gerhard

(57) **Zusammenfassung**

Die Kabelführung an einem Tisch **(1),** welcher eine von einem Untergestell **(10,11,12)** getragene Tischplatte **(13)** aufweist, die eine Tischplattenoberseite **(131)** als Arbeitsfläche und eine Tischplattenunterseite **(132)** besitzt, umfasst einen Steckdosenblock **(2,2'),** an den Elektrokabel **(9)** für die Stromversorgung und/oder Informationstechnik herangeführt sind und der Anschlüsse **(20,20')** zum Einstecken von Elektrokabeln **(9)** für die Stromentnahme und/oder Verbindung mit Geräten der Informationstechnik hat. Am Steckdosenblock **(2,2')** sind Andockmittel **(25,25',25";28,29;258,259;7,74)** angeordnet, die ein lösbares Anhängen des Steckdosenblocks **(2,2')** am Untergestell **(10,11,12)** oder an einem Basisteil **(4)** erlauben, welches benachbart zu einer in der Tischplatte **(13)** vorgesehenen Ausnehmung **(133)** angeordnet ist. Bei einer ersten Ausführungsform der Kabelführung umfassen die Andockmittel **(25,25';28,29)** für den Steckdosenblock **(2,2')** einen Halter **(25,25')** zur Aufnahme des Steckdosenblocks **(2,2')** und Befestigungselemente **(28,29)** zur lösbaren Verbindung des Halters **(25,25')** mit dem Untergestell **(10,11,12).** Der Halter **(25)** ist mit Rastorganen **(251)** versehen, die an Komplementärkonturen am Steckdosenblock **(2)** angreifen, wodurch der Halter **(25)** und der Steckdosenblock **(2)** lösbar miteinander verbunden sind. Alternativ ist der Steckdosenblock **(2')** mittels Schrauben **(258)** an den Halter **(25')** angeschraubt. Bei einer zweiten Ausführungsform umfassen die Andockmittel **(7,74)** mit dem Steckdosenblock **(2)** verbundene Lager **(7)** und daran angeordnete Befestigungselemente **(74,76).** Das Basisteil **(4)** besitzt Gegenkonturen **(43),** die mit den Befestigungselementen **(74,76)** der Lager **(7)** zusammenwirken.

## Beschreibung

### Anwendungsgebiet der Erfindung

Die vorliegende Erfindung bezieht sich auf eine Kabelführung an einem Tisch mit Kabelhalterungen sowie Stromversorgungs- und/oder Kommunikationsbuchsen, die zum Anschluss von z.B. Notebooks, Beamern oder Tischlampen nutzbar sind.

### Stand der Technik

Die EP 1 182 747 A2 zeigt eine Steckdoseneinheit, die in eine Aussparung einer Tischplatte einsetzbar ist. Die Steckdoseneinheit lässt sich um die Längsachse drehen und hat eine kreisrunde Querschnittsform, die mit 3 um etwa 60° gegeneinander versetzten Abflachungen versehen ist. Die Kabelzuführung erfolgt in axialer Richtung. Zwei der Abflachungen dienen als Verschlussdeckel, wobei innerhalb der dritten Abflachung die Steckerbuchsen integriert sind. Abhängig von der Drehung der Steckdoseneinheit verdeckt einer der beiden Verschlussdeckel die Aussparung oder die Steckerbuchsen sind für den Anschluss von Gerätesteckern zugänglich. Nachteilig bei dieser Konstruktion ist die Beanspruchung der Zuführungskabel durch die Drehung der Steckdoseneinheit sowie die relativ schwergängige Handhabbarkeit beim Drehen von der geschlossenen Stellung in die Offenstellung und umgekehrt. Überdies ist die Konstruktion verhältnismässig aufwendig, was die Vorrichtung als Einbauteil verteuert.

Aus der DE 202 06 740 U1 ist eine weitere, zum Einsetzen in eine Aussparung in einer Tischplatte drehbare Steckdoseneinheit bekannt. Diese Steckdoseneinheit besteht aus einem Gehäuse, das zwischen zwei zueinander komplementären Wangen gefasst wird, die an der Plattenunterseite befestigt sind. Die Drehachse verläuft dabei quer zum Schwenkbereich der Steckdoseneinheit und sitzt nahe an einem Ende des Gehäuses. Im eingeschwenkten Zustand schliesst die von einem Deckel gebildete Oberseite des Gehäuses innerhalb der Aussparung bündig mit der Plattenoberseite ab. Im ausgeschwenkten Zustand ragt das Gehäuse mit der Steckdoseneinheit rechtwinklig aus dem Tisch heraus zum Anschliessen von elektrischen Verbrauchern. Nachteilig dabei ist, dass in dem Bereich, der durch das nach oben hin ausgeschwenkte Gehäuse beansprucht wird, Arbeitsfläche belegt ist. Die Konstruktion ist überdies verhältnismässig aufwendig, was die Vorrichtung als Einbauteil verteuert. Ausserdem wird die Gesamtoptik des Tisches bei ausgeklapptem Gehäuse beeinträchtigt, was das Erscheinungsbild negativ beeinflusst.

Gegenstand der DE 201 04 438 U1 ist eine mit einem Deckel verschliessbare Steckdosenbox, die im wesentlichen aus einem Rahmen mit einer Rahmenöffnung besteht. Der Rahmen hat einen viereckigen Aussenabschnitt mit einem umlaufenden überstehenden Auflagerand, mit dem die Steckdosenbox in einer Ausnehmung, z.B. innerhalb einer Tischplatte, im eingesetzten Zustand gehalten ist, wobei der Auflagerand gleichzeitig den Rand der Ausnehmung abdeckt. Über einen Haltesteg wird die Rahmenöffnung von einer Seite her fixiert. An der anderen Seite verbleibt zwischen Rahmen und Rahmenöffnung ein Freiraum. In die Rahmenöffnung ist ein Unterteil mit daran befestigten Steckdosenkupplungen einschieb- und fixierbar. An der Oberseite des Rahmens ist ein Deckel, über an der Innenseite des Rahmens befindliche Führungsvorsprünge, angelenkt. An den Schmalseiten besitzt der Deckel Führungsnuten, wobei im Bereich eines Endabschnitts sich jeweils eine kreisförmige Erweiterung befindet. Diese Erweiterungen ermöglichen, dass der Deckel von der horizontalen Abdeckstellung um die Führungsnuten in die vertikale Offenstellung gedreht werden kann. Mittels der Führungsvorsprünge gleitet der Deckel mit Hilfe der Führungsnuten nach unten durch den Freiraum, bis die Längskante des Deckels bündig mit der Ebene des Auflagerands abschliesst.

In der DE 20 2006 016 476 U1 ist eine Steckdoseneinheit an einem Arbeitstisch offenbart, die mit Stromversorgungs- und/oder Kommunikationsbuchsen ausgestattet ist. Die Steckdoseneinheit sitzt in einem Halter, welcher unterhalb der Tischplatte angebracht ist. Der Steckdoseneinsatz ist über eine in der Tischplatte vorhandene Aussparung zugänglich, wobei ein von der Aussparung entfernbarer Deckel vorhanden ist. Der Deckel ist mit am Halter schwenkbar gelagerten Armen verbunden und lässt sich aus einer Schliessstellung, in welcher der Deckel innerhalb der Aussparung liegt, in eine Offenstellung bewegen, in welcher der Deckel schräg angestellt aus der Aussparung herausgehoben ist. Alternativ ist der Deckel als über die zumindest eine Aussparung auf der Tischplattenoberseite schiebbare Abdeckung ausgebildet.

### Aufgabe der Erfindung

In Relation zum vorbekannten Stand der Technik liegt der Erfindung die Aufgabe zugrunde, die Kabelführung an einem Tisch gesamthaft mit zugehörigen Kabelhalterungen sowie Stromversorgungs- und/oder Kommunikationsbuchsen zu verbessern, so dass die Montage am Tisch effizienter realisierbar ist und der Gebrauch der Einrichtungen im Zugriff praktischer wird. Zugleich gilt es, an den Tischaufbauten ästhetische Aspekte zu wahren. Schliesslich soll die zu schaffende Kabelführung verschiedene Modifikationen je nach Tischaufbau und Ausstattungsanforderungen erlauben.

### Übersicht über die Erfindung

Die Kabelführung an einem Tisch, welcher eine von einem Untergestell getragene Tischplatte aufweist, die eine Tischplattenoberseite als Arbeitsfläche und eine Tischplattenunterseite besitzt, umfasst einen Steckdosenblock, an den Elektrokabel für die Stromversorgung und/oder Informationstechnik herangeführt sind und der Anschlüsse zum Einstecken von Elektrokabeln für die Stromentnahme und/oder Verbindung mit Geräten der Informationstechnik hat. Am Steckdosenblock sind Andockmittel angeordnet, die ein lösbares Anhängen des Steckdosenblocks am Untergestell oder an einem Basisteil erlauben, welches benachbart zu einer in der Tischplatte vorgesehenen Ausnehmung angeordnet ist.

### Spezielle erste Ausführungsform der Kabelführung

Die Andockmittel für den Steckdosenblock umfassen einen Halter zur Aufnahme des Steckdosenblocks und Befestigungselemente zur lösbaren Verbindung des Halters mit dem Untergestell. Hierbei ist der Halter mit Rastorganen versehen, die an Komplementärkonturen am Steckdosenblock angreifen, wodurch der Halter und der Steckdosenblock lösbar miteinander verbunden sind. Alternativ ist der Steckdosenblock mittels Schrauben an den Halter angeschraubt. Die Befestigungselemente umfassen drehbare Riegel zum Eingreifen am Untergestell und Verbindungsorgane zur Befestigung der Riegel am Halter. Die Riegel sind zum Eingreifen in eine Strebe als Bestandteil des Untergestells bestimmt. Die Strebe ist ein Hohlprofil mit einem Raster von Durchbrüchen. Die Riegel kommen innerlich der Strebe hinter Durchbrüchen zu liegen.

Die Strebe ist ein Vierkanthohlprofil, welches eine Oberseite, eine Unterseite und zwei Seitenflächen aufweist. Die Durchbrüche in beiden Seitenflächen sind zueinander kongruent vorgesehen. Die Strebe besitzt einen Hohlraum, wobei dieser und die Durchbrüche zur Durchführung von Kabeln nutzbar sind. Die Enden der Strebe sind als Andockteile zur Verbindung mit Kupplungsteilen als eine nächste Komponente des Untergestells ausgebildet. Die Kupplungsteile sind zugleich zum Anbau von Tischbeinen als eine weitere Komponente des Untergestells nutzbar.

Haken sind zum Einhängen in die Durchbrüche der Strebe als Träger für die Kabel vorgesehen. Ferner gibt es Adapter als Träger für einen Kanalabschnitt, in welchem sich Kabel führen lassen. Die Adapter kommen innerlich der Strebe hinter den Durchbrüchen zu liegen und lassen sich durch Drehen arretieren. Manschetten sind als Umrandung der Durchbrüche zum Kantenschutz durchgeführter Kabel vorgesehen.

### Spezielle zweite Ausführungsform der Kabelführung

Die Andockmittel für den Steckdosenblock umfassen mit diesem verbundene Lager und daran angeordnete Befestigungselemente. Hierbei ist das Basisteil als ein die Ausnehmung an der Tischplattenunterseite umrandender Rahmen gestaltet, und das Basisteil besitzt Gegenkonturen, die mit den Befestigungselementen der Lager zusammenwirken.

Am Steckdosenblock ist beidseits je ein Seitenstück fest angeordnet, an dessen Aussenfläche ein weiterer Anschluss zum Einstecken von Elektrokabeln für die Stromentnahme und/oder -einspeisung und/oder die Verbindung mit Geräten der Informationstechnik zugänglich sein kann. Die Seitenstücke in den Lagern sind begrenzt drehbar geführt.

Die Befestigungselemente an einem Lager umfassen zumindest einen frei endenden Zapfen und einen daran vorgesehenen Hinterschnitt. Die Gegenkonturen am Basisteil sind als schlüssellochförmige Freischnitte mit je einem erweiterten und einem daran anschliessenden verengten Bereich ausgebildet. Beim Andocken des Steckdosen blocks an das Basisteil fahren die Zapfen zunächst in die erweiterten Bereiche der Gegenkonturen ein, und die Zapfen im angedockten Endzustand kommen in den verengten Bereichen der Gegenkonturen zu liegen, wobei Wandungsränder des Basisteils in die Hinterschnitte an den Zapfen eingreifen.

Die Befestigungselemente an einem Lager und die Gegenkonturen am Basisteil sind jeweils paarweise vorhanden. Am Lager ist ein Arretierorgan vorgesehen, zu dem im Basisteil der erweiterte Bereich der Gegenkontur als Komplementärorgan dient, die im angedockten Endzustand miteinander lösbar in Eingriff sind. Das Arretierorgan am Lager ist ein elastisch biegbarer Steg mit einer hochstehenden Nase.

An der Tischplattenunterseite ist eine die Ausnehmung umlaufende Vertiefung zum Einsetzen des Basisteils vorhanden. Ein von der Tischplattenoberseite in die Ausnehmung einsetzbarer oberer Rahmen ist vorgesehen. Die Ausnehmung lässt sich mit einem nach oben herausklappbaren Deckel abdecken.

Als Modifikation umfassen die Andockmittel für den Steckdosenblock einen Halter zur Aufnahme des Steckdosen blocks und Befestigungselemente, wobei der Steckdosenblock mittels Schrauben an den Halter angeschraubt ist. Das Basisteil ist wiederum als ein die Ausnehmung an der Tischplattenunterseite umrandender Rahmen gestaltet, wobei der Halter jedoch mittels Schrauben am Basisteil lösbar befestigt ist. Dieser abgewandelte Halter besitzt zunächst eine Schrägfläche zum Aufsetzen des Steckdosenblocks. Beidseits von der Oberkante der Schrägfläche erstreckt sich jeweils eine Winkelstrebe, deren Oberseite zum Ansetzen an den Rahmen bestimmt ist, und die jeweils eine Seitenfläche hat. Je ein sich von jeder Seitenfläche erstreckender Achsstift dient zur Aufhängung eines Kabelkorbs.

### Kurzbeschreibung der beigefügten Zeichnungen

Es zeigen:

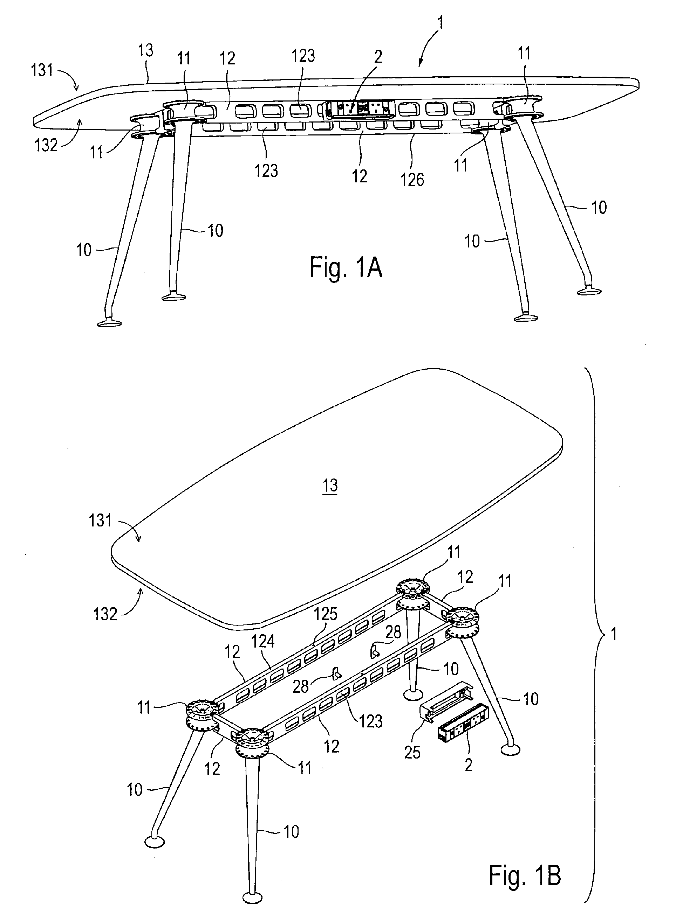

- Figur 1A: - einen Tisch mit rechteckförmiger Tischplatte und einem Unterge- stell, bestehend aus Kupplungsteilen, Streben und Tischbeinen, sowie einem anmontierten Steckdosen block, als *erste Ausfüh- rungsform* der Kabelführung, in Perspektivansicht von unten;
- Figur 1B: - die Anordnung gemäss Figur 1A, mit abgehobener Tischplatte und gelöstem Steckdosenblock, in Perspektivansicht von oben;
- Figur 2A: - eine Strebe mit daran montierter Kombination aus Halter und Steckdosenblock *erster Variante* und daran angeschlossenem Elektrokabel, in Perspektivansicht von vorn;
- Figur 2B: - die Anordnung gemäss Figur 2A, in perspektivischer Explosivan- sicht;
- Figur 3A: - einen Halter *erster Variante* aus Figur 2A, in Perspektivansicht von vorn;
- Figur 3B: - den Halter gemäss Figur 3A, in Perspektivansicht von hinten;
- Figur 4: - einen Riegel aus Figur 2B, in Perspektivansicht von vorn;

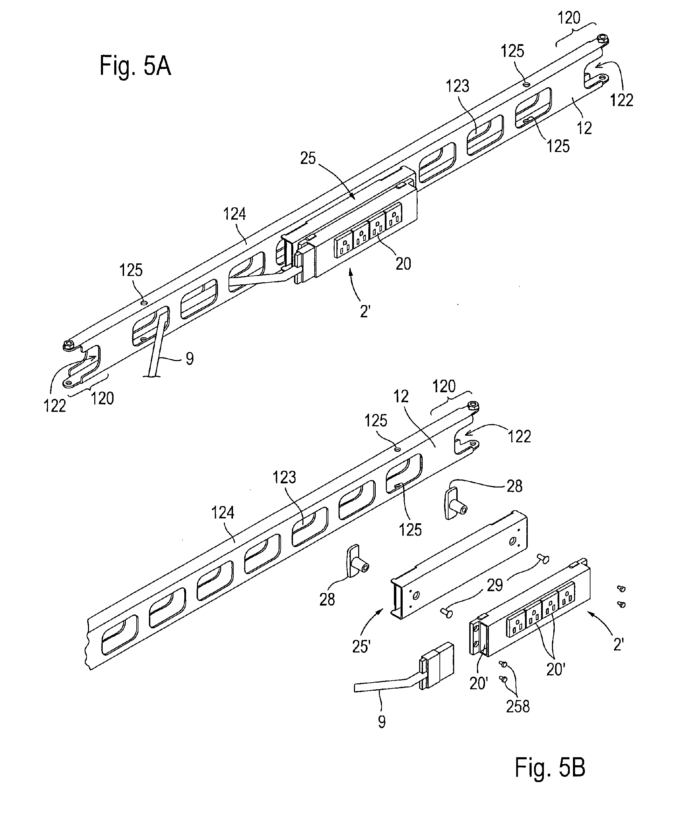

- Figur 5A: - eine Strebe mit daran montierter Kombination aus Halter und Steckdosenblock *zweiter Variante* und daran angeschlossenem Elektrokabel, in Perspektivansicht von vorn;
- Figur 5B: - die Anordnung gemäss Figur 5A, in perspektivischer Explosivan- sicht;

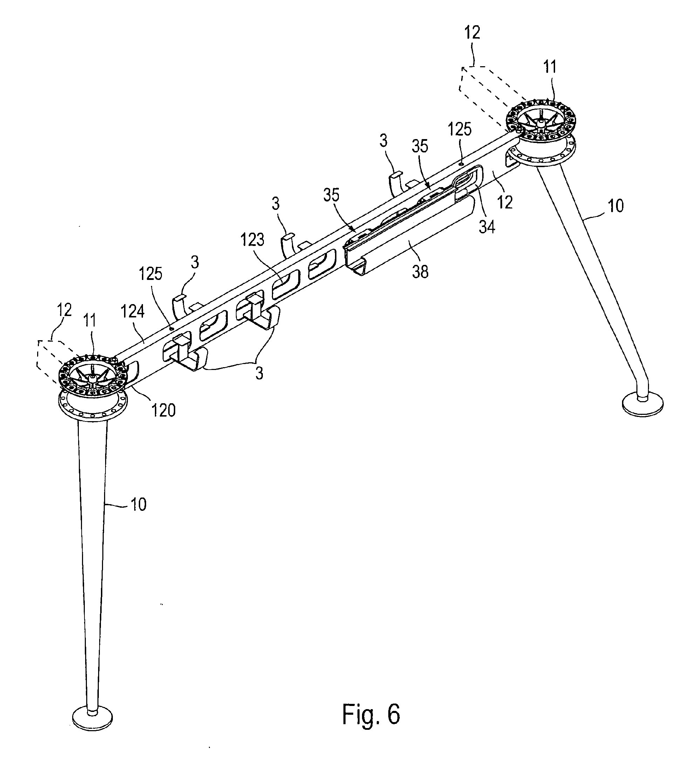

- Figur 6: - einen Teil des Untergestells gemäss Figur 1B, mit an der Strebe eingesetzten Haken, einer Manschette und Adaptern zur Fixierung eines Kanals, in Perspektivansicht von vorn;

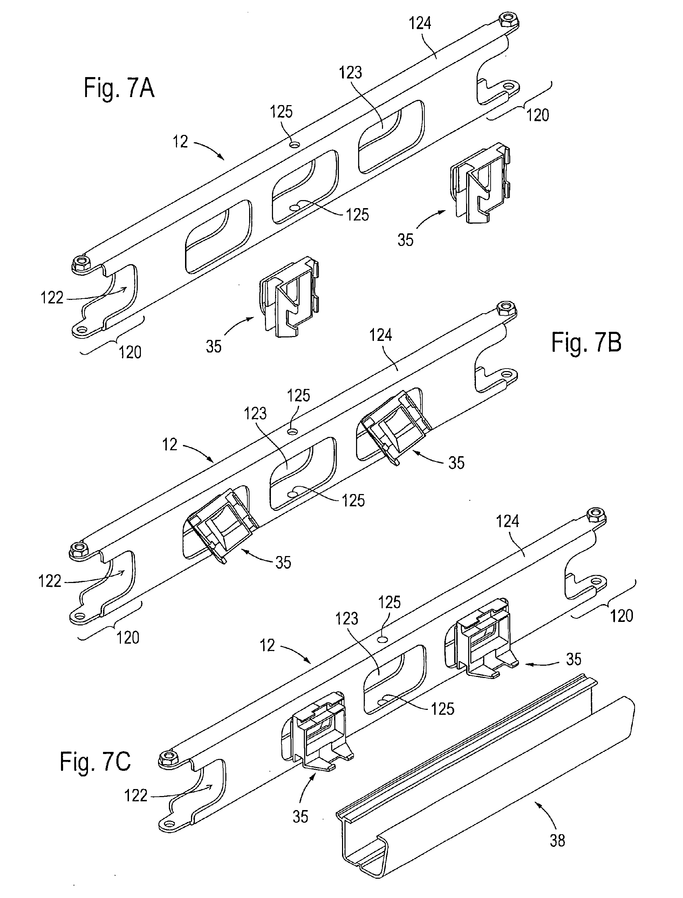

- Figur 7A: - eine Strebe mit angenäherten Adaptern, in Perspektivansicht von vorn;
- Figur 7B: - die Anordnung gemäss Figur 7A, mit partiell eingesetzten Adap- tern, in Perspektivansicht von vorn;
- Figur 7C: - die Anordnung gemäss Figur 7B, mit vollständig eingesetzten Adaptern und angenähertem Kanal, in Perspektivansicht von vorn;

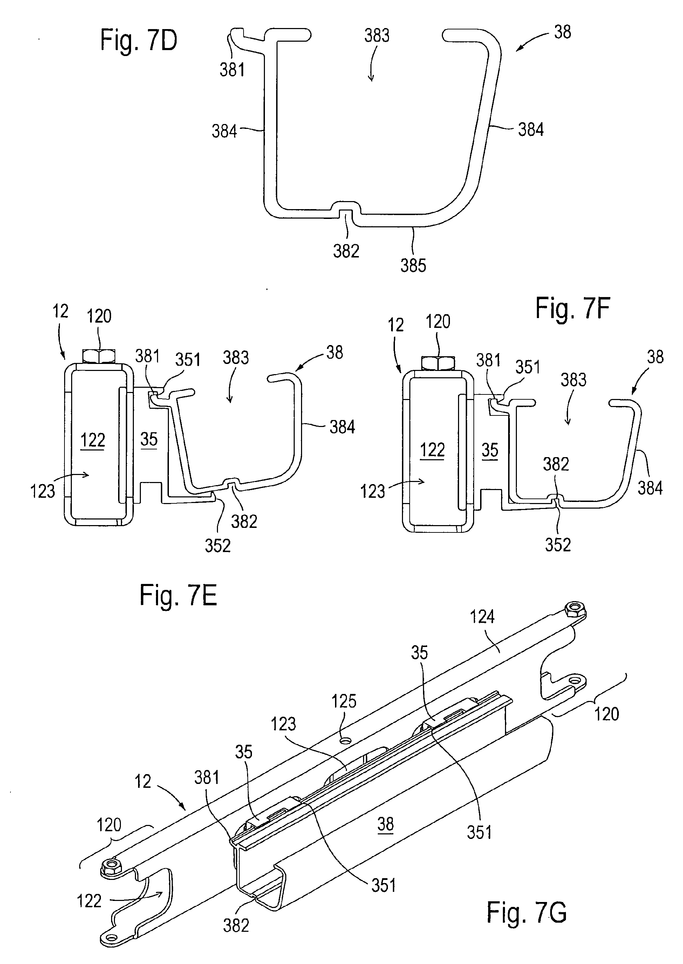

- Figur 7D: - den Kanal aus Figur 7C, in vergrössertem Querschnitt;
- Figur 7E: - die Anordnung gemäss Figur 7C mit partiell eingehängtem Kanal, im Querschnitt;
- Figur 7F: - die Anordnung gemäss Figur 7E, mit vollständig eingehängtem Ka- nal, im Querschnitt;
- Figur 7G: - die Anordnung aus Figur 7F, in Perspektivansicht von vorn;

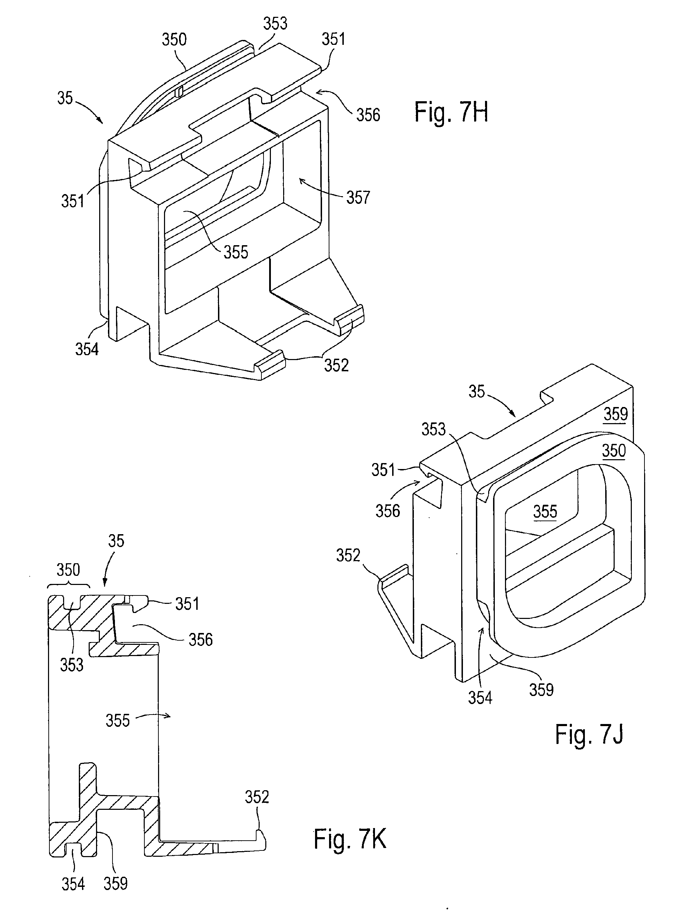

- Figur 7H: - den Adapter aus Figur 7A, in vergrösserter Perspektivansicht von vorn;
- Figur 7J: - den Adapter gemäss Figur 7H, in Perspektivansicht von hinten;
- Figur 7K: - den Adapter gemäss Figur 7H, in Schnittdarstellung;

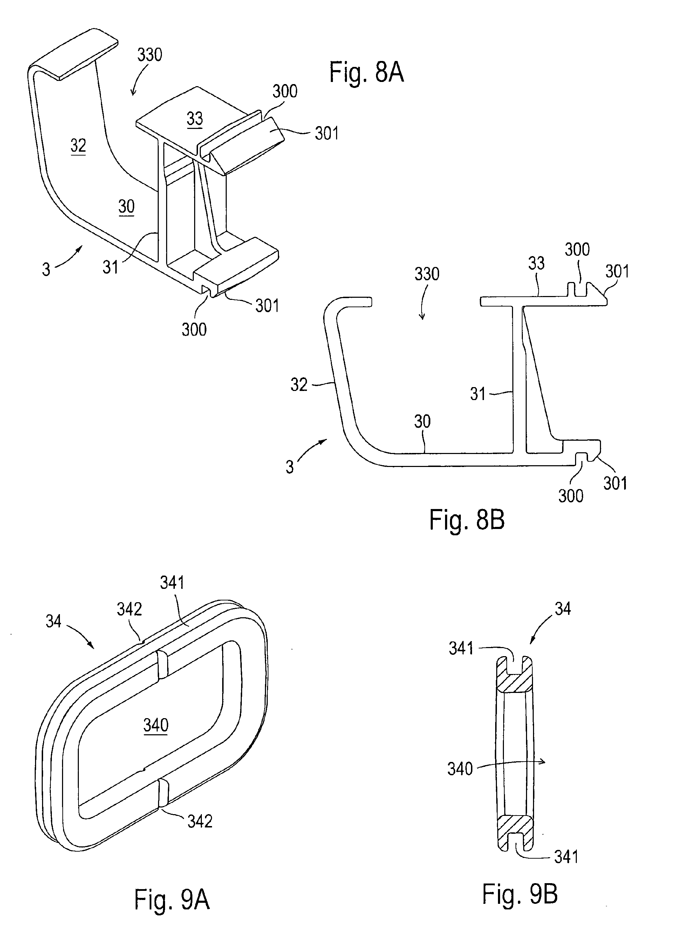

- Figur 8A: - den Haken aus Figur 6, in vergrösserter Perspektivansicht von hin- ten;
- Figur 8B: - den Haken gemäss Figur 8A, in Seitenansicht;
- Figur 9A: - die Manschette aus Figur 6, in vergrösserter Perspektivansicht von vorn;
- Figur 9B: - die Manschette gemäss Figur 9A, in Schnittdarstellung;

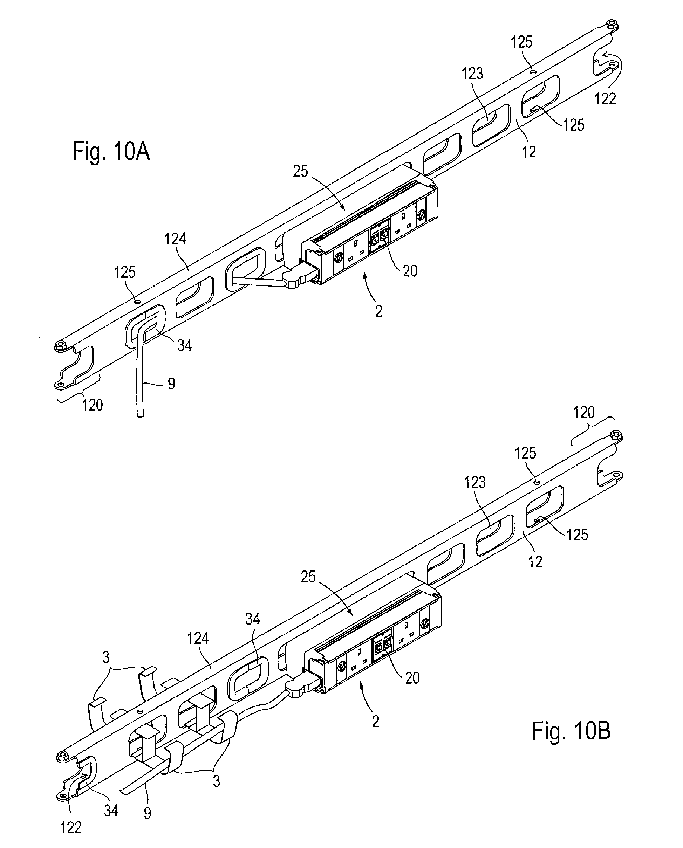

- Figur 10A: - die Anordnung gemäss Figur 2A, mit an der Strebe fixierten Man- schetten, in Perspektivansicht von vorn;
- Figur 10B: - die Anordnung gemäss Figur 2A, mit an der Strebe fixierten Man- schetten und Haken, in Perspektivansicht von vorn;
- Figur 11A: - einen Tisch mit rechteckiger Tischplatte und darin vorhandener Ausnehmung mit geöffnetem Deckel, als *zweite Ausführungsform* der Kabelführung, in Perspektivansicht von vorn;
- Figur 11B: - den Tisch gemäss Figur 11A, mit zwei Ausnehmungen und jeweils geöffneten Deckeln, in Perspektivansicht von vorn;
- Figur 11C: - einen Tisch mit runder Tischplatte und mehreren darin vorhande- nen Ausnehmungen mit jeweils geöffneten Deckeln, in Perspektiv- ansicht von vorn;

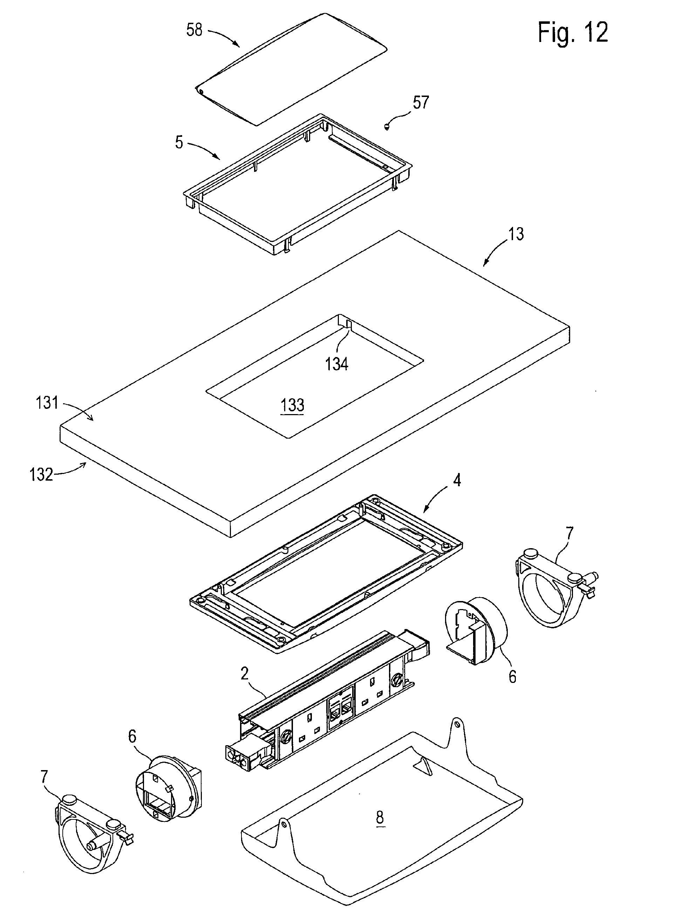

- Figur 12: - den Bereich der Tischplatte um den Ausschnitt gemäss Figur 11A, mit darin einsetzbarem oberem und unterem Rahmen, Deckel, An- schlag, Steckdosenblock *erster Variante,* Endkappen, Lagern und Kabelkorb, in perspektivischer Explosivansicht;

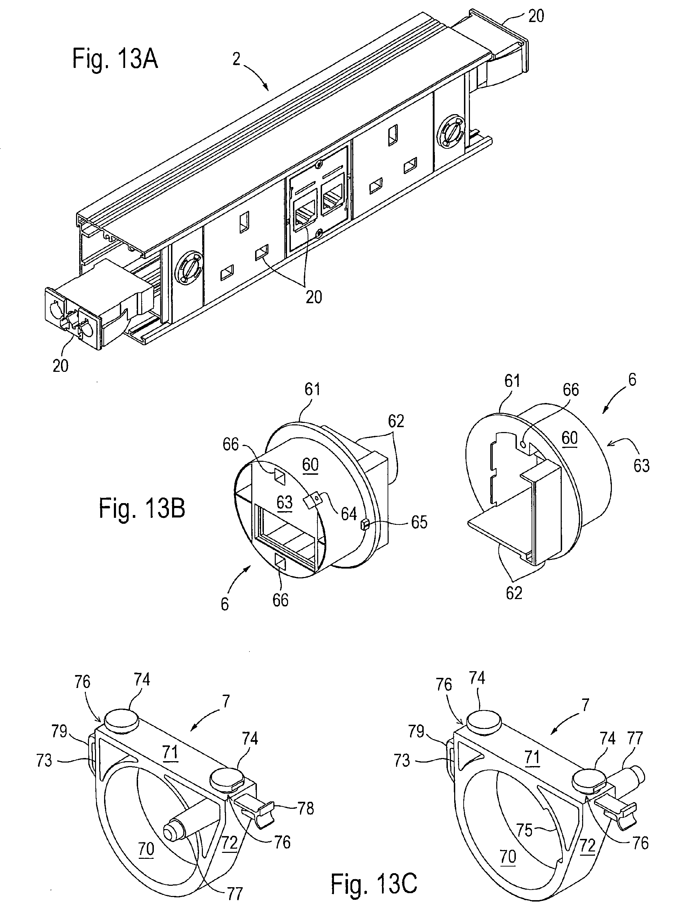

- Figur 13A: - den Steckdosenblock aus Figur 12, in vergrösserter Perspektivan- sicht von vorn;
- Figur 13B: - die beiden Endkappen aus Figur 12, in vergrösserter Perspektivan- sicht von vorn;
- Figur 13C: - die beiden Lager aus Figur 12, in vergrösserter Perspektivansicht von vorn;

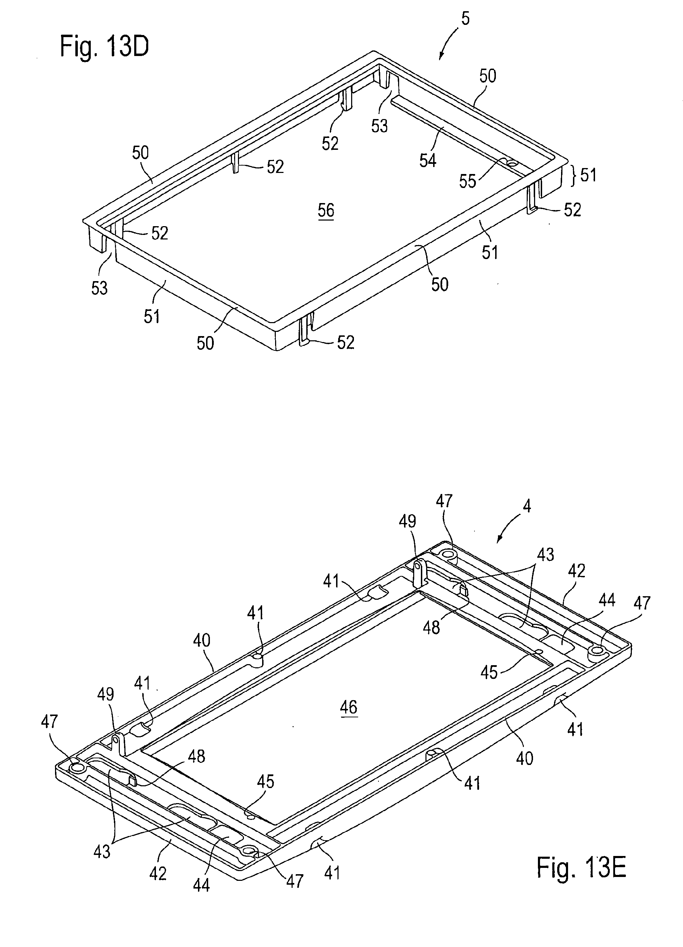

- Figur 13D: - den oberen Rahmen aus Figur 12, in vergrösserter Perspektivan- sicht von vorn;
- Figur 13E: - den unteren Rahmen aus Figur 12, in vergrösserter Perspektivan- sicht von vorn;

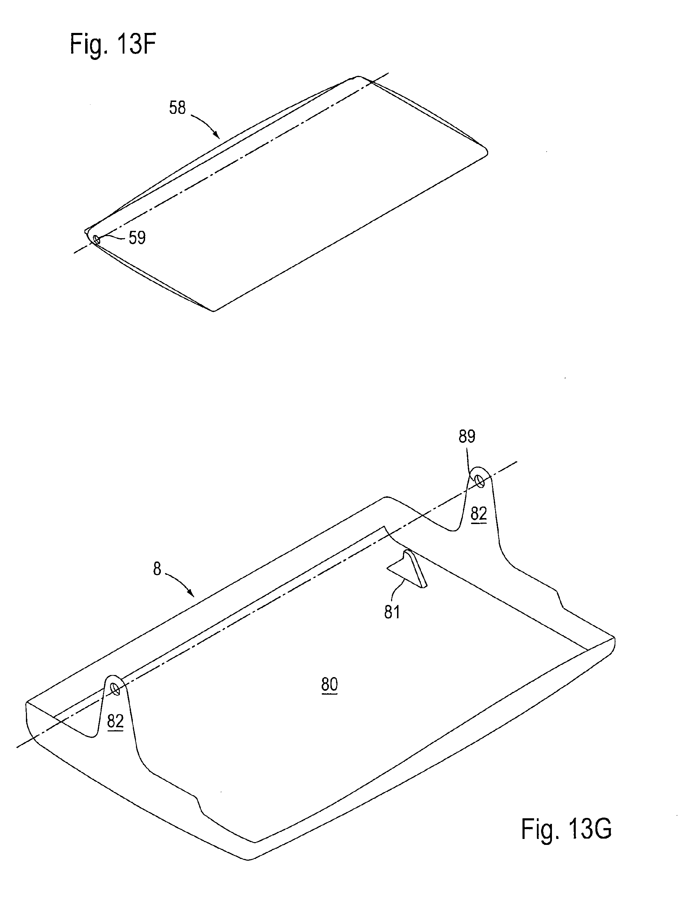

- Figur 13F: - den Deckel aus Figur 12, in vergrösserter Perspektivansicht von vorn;
- Figur 13G: - den Kabelkorb aus Figur 12, in vergrösserter Perspektivansicht von vorn;
- Figur 14A: - den Steckdosenblock gemäss Figur 12, mit aufgeschobenen End- kappen und diesen angenäherten Lagern, in vergrösserter Per- spektivansicht von vorn;
- Figur 14B: - die Anordnung gemäss Figur 14A, mit auf den Endkappen aufge- schobenen Lagern, in Perspektivansicht von vorn;
- Figur 15A: - den Bereich der Tischplatte um den Ausschnitt gemäss Figur 12, mit Deckel, Sicherungselementen, unterem Rahmen und Steckdo- senblock *erster Variante* mit Endkappen sowie Lagern, in partieller Explosivansicht von unten;
- Figur 15B: - die Anordnung gemäss Figur 15A, mit in die Ausnehmung einge- setztem offenem Deckel, in Perspektivansicht von unten;
- Figur 15C: - die Anordnung gemäss Figur 15B, mit eingesetzten Sicherungsele- menten und eingesetztem unterem Rahmen, in Perspektivansicht von unten;
- Figur 15D: - die Anordnung gemäss Figur 15C, mit vollständig in den unteren Rahmen eingesetztem Steckdosenblock, in Perspektivansicht von unten;

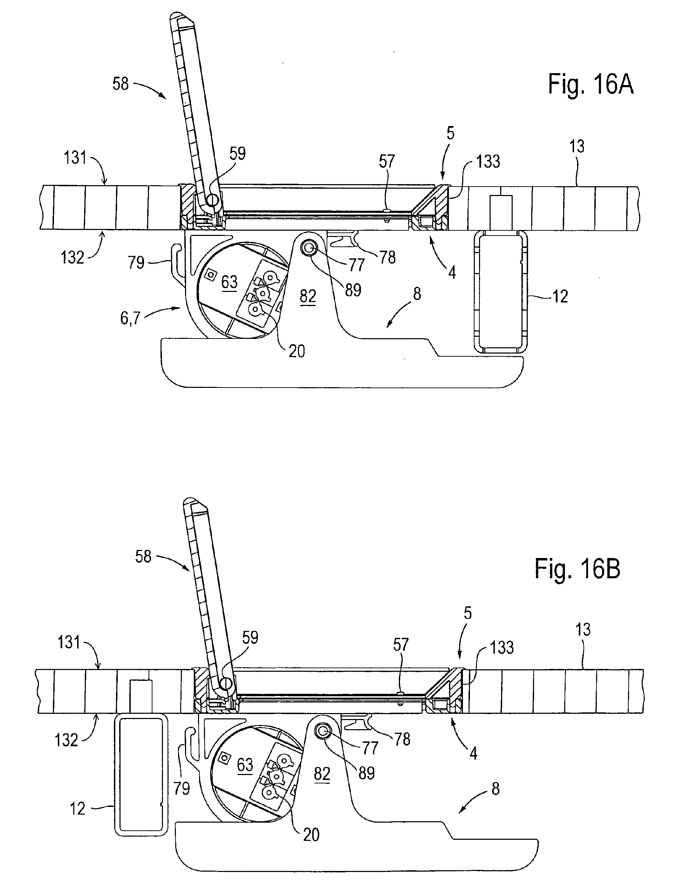

- Figur 16A: - die Anordnung gemäss Figur 15D hinter einer Strebe, im Vertikal- schnitt;
- Figur 16B: - die Anordnung gemäss Figur 16A vor einer Strebe im Vertikal- schnitt;

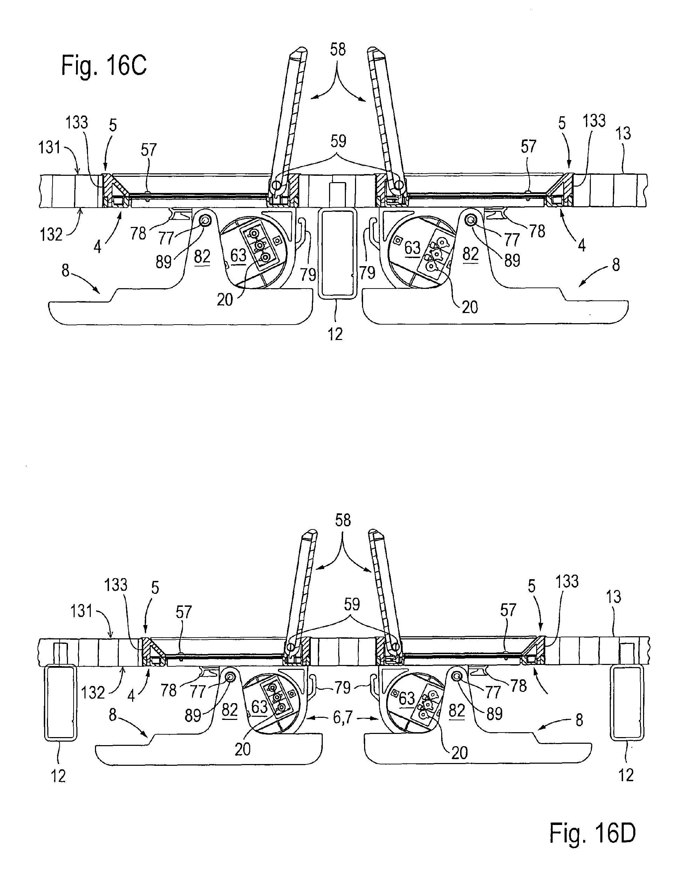

- Figur 16C: - die Anordnung gemäss Figur 16B zweifach spiegelsymmetrisch zueinander jeweils vor einer Strebe, im Vertikalschnitt;
- Figur 16D: - die Anordnung gemäss Figur 16A zweifach spiegelsymmetrisch zueinander jeweils hinter einer Strebe, im Vertikalschnitt; und

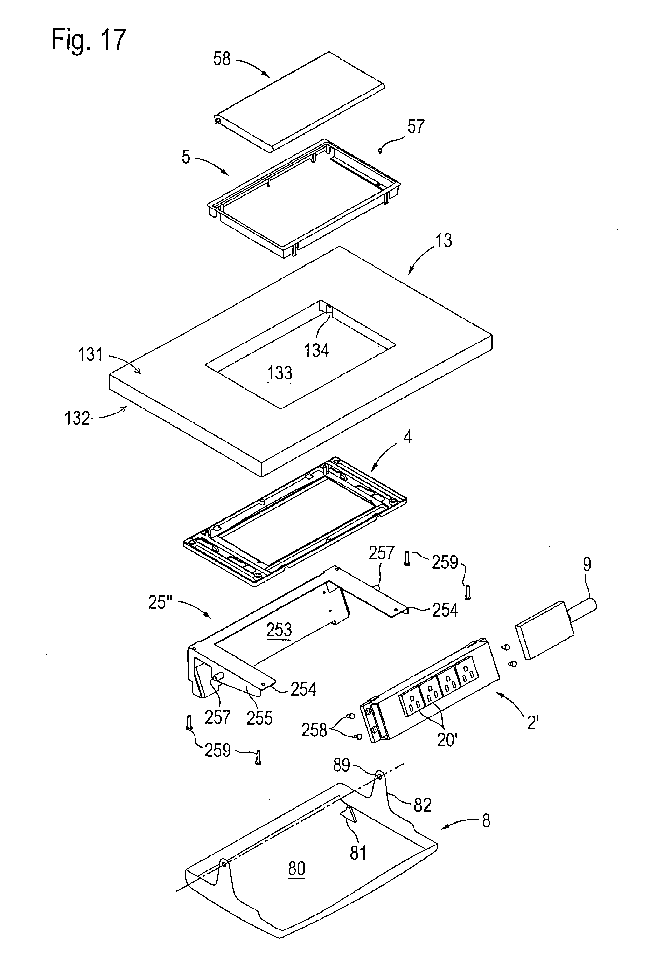

- Figur 17: - die Anordnung gemäss Figur 12, mit dem Steckdosenblock *zweiter Variante* und Halter *dritter Variante*, in perspektivischer Explosiv- ansicht.

### Ausführungsbeispiele

Anhand der beiliegenden Zeichnungen erfolgt nachstehend die detaillierte Beschreibung je eines Ausführungsbeispiels zur erfindungsgemässen Kabelführung an einem Tisch der beiden Ausführungsformen mit den zugehörigen Bauteilen und Baueinheiten.

Für die gesamte weitere Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden Figurenbeschreibungen Bezug genommen. Im Interesse der Übersichtlichkeit wird auf die wiederholte Bezeichnung von Bauteilen in nachfolgenden Figuren zumeist verzichtet, sofern zeichnerisch eindeutig erkennbar ist, dass es sich um "wiederkehrende" Bauteile handelt.

### Figuren 1A und 1B

Der Tisch **1** hat eine z.B. rechteckförmige Tischplatte **13** mit der Oberseite **131** und der Unterseite **132.** Die Tischplatte **1** wird von einem Untergestell getragen, das sich aus vier rechteckförmig angeordneten Streben **12,** je einem in jedem Eckbereich angeordneten Kupplungsteil **11** und je einem an jedem Kupplungsteil **11** befestigten Tischbein **10** zusammensetzt. Die jeweils beiden Streben **12,** welche auf das zugehörige Kupplungsteil **11** zulaufen, sind daran befestigt. Der Aufbau des Untergestells ist Gegenstand der WO 2008/049 244 A1 der Anmelderin.

Die Streben **12** haben die Gestalt eines Vierkanthohlprofils, das sich hochkant zwischen den Kupplungsteilen **11** erstreckt und ein Raster aus Durchbrüchen **123** hat, das jeweils kongruent in beiden Seitenwandungen vorhanden ist. Die Strebe **12** hat auf der Oberseite **124** ein Schraubenloch **125,** das senkrecht verläuft und an der Unterseite **126** austritt, so dass sich die Tischplattenunterseite **132** mit Fixiermitteln, z.B. Schrauben, auf der Strebe **12** befestigen lässt. Die Durchbrüche **123** sind zur Aufnahme und Arretierung verschiedener Komponenten bestimmt, die primär der Kabelführung bzw. Elektrifizierung am Tisch 1 dienen, wie dem in einen Halter **25** *erster Variante* einsetzbaren Steckdosenblock **2** *erster Variante* und der den Halter **25** fixierenden Riegeln **28,** aber auch sekundären Teilen zur Kabelführung gemäss späterer Beschreibung. Die Komponenten zur Elektrifizierung lassen sich an den Streben **12** vor dem Aufsetzen der Tischplatte **13** installieren, wodurch die gesamte Montage in dieser *ersten Ausführungsform* der Kabelführung vereinfacht wird.

### Figuren 2A bis 4

Die Strebe **12** hat an ihren gegenüberliegenden Enden jeweils ein Andockteil **120** zur Verbindung mit dem Kupplungsteil **11.** Innerlich der Strebe **12** liegt ein Hohlraum **122,** der zur Durchführung von Elektrokabeln **9** nutzbar ist. An der Strebe **12** ist der quaderförmige Halter **25** *erster Variante* mittels Riegeln **28** fixierbar. Der Halter **25** hat eine Aufnahme **26,** in welche der Steckdosenblock **2** *erster Variante -* entspricht in Europa gängigem Standard - einsetzbar ist. Die Aufnahme **26** geht in einen Durchbruch über, der zum Durchtritt von elektrischen Anschlüssen und Kabeln nutzbar ist. Benachbart zur Aufnahme **26** ist am Halter **25** je ein Durchgangsloch **250** vorhanden, das dem Durchtritt des Gewindezapfens **281** des Riegels **28** dient, wobei der Gewindezapfen **281** von einem Steg **280** rechtwinklig abgeht. Mittels Schraube **29** ist der Riegel **28** drehbar im Durchgangsloch **250** des Halters **25** positioniert. Von den Eckbereichen des Halters **25** erstreckt sich jeweils ein Rastorgan **251,** das an seinem freien Ende mit einer klammerartigen Profilierung versehen ist, wobei sich jeweils zwei Rastorgane **251** gegenüberliegen und dabei ihre Profilierungen gegeneinander zeigen. In entgegengesetzter Richtung der Rastorgane **251** erhebt sich neben den Durchgangslöchern **250** je ein Anschlag **252,** der die Form eines Zapfens hat.

Bei an der Strebe **12** montiertem Halter **25** liegen die Stege **280** der Riegel **28** im Hohlraum **122** der Strebe **12** und erstrecken sich in Längsrichtung des Halters **25** bzw. der Strebe **12.** Durch manuelles Verdrehen eines Stegs **280** in die Querrichtung, was vorzugsweise durch den dazu gegenüberliegenden Durchbruch **123** geschieht, d.h. bis der Steg **28** quer zur Längserstreckung des Halters **25** bzw. der Strebe **12** verläuft und mit je einer Flanke an den Anschlägen **252** zu liegen kommt, wird der Halter **25** mit der Strebe **12** verklemmt. Die Klemmwirkung wird dadurch erzielt, dass die Stege **280** mit ihren zum Gewindezapfen **281** gerichteten Flächen vom Hohlraum **122** der Strebe **12** an deren Innenwandung anliegen, wobei die entsprechende Klemmkraft über die Schrauben **29** einstellbar ist. Am Halter **25** ist ein Absatz **27** vorhanden, der mit seiner umlaufenden Kante in dem entsprechenden Durchbruch **123** der Strebe **12** zu liegen kommt, was als Positionierungshilfe und zusätzliche Arretierung dient. Der Steckdosenblock **2** wird in definierter Ausrichtung der Anschlüsse **20** in den Halter **25** eingerastet. Dabei greifen die Rastorgane **251** in komplementäre Konturen am Steckdosenblock **2.** Die Anschlüsse **20** sind zum Anschliessen von Kabeln **9** zur Stromversorgung oder Datenübertragung bestimmt.

### Figuren 5A und 5B

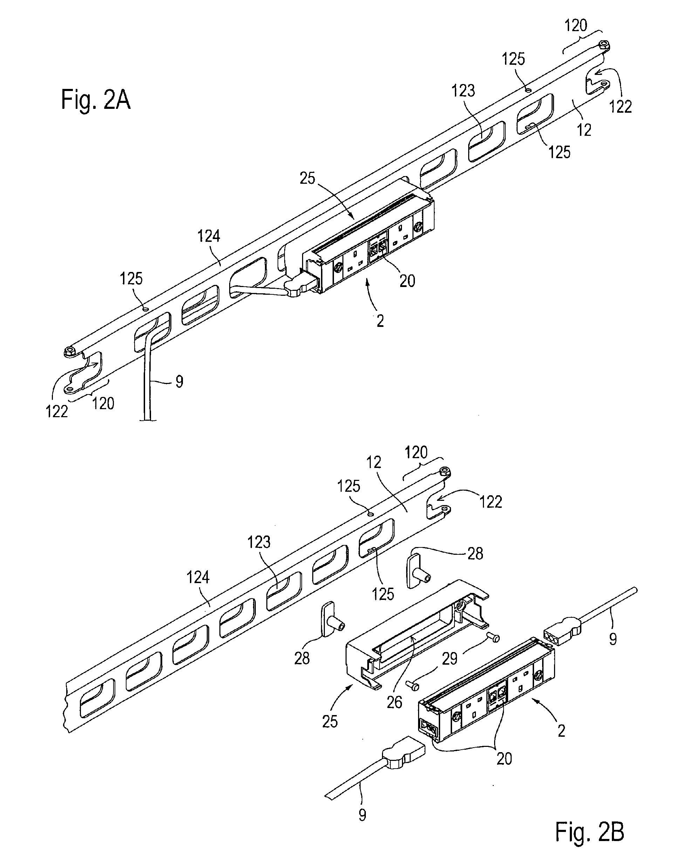

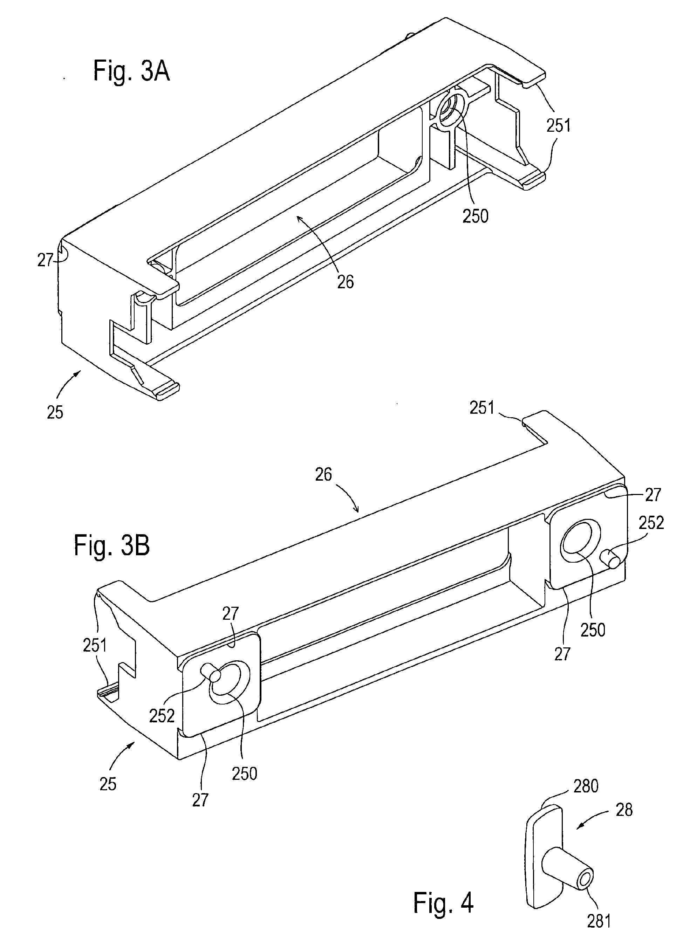

Ist an der Strebe **12** ein Steckdosenblock **2'** *zweiter Variante -* entspricht in USA gängigem Standard - anzudocken, verwendet man zur Befestigung an der Strebe **12** einen kompatiblen Halter **25'** *zweiter Variante*. Dieser Halter **25'** lässt sich auf gleiche Weise wie der Halter **25** *erster Variante* mittels der Riegel **28** und den Schrauben **29** in den Durchbrüchen **123** der Strebe **12** lösbar fixieren (s. Figuren 2A-4). Mittels Schrauben **258** wird der Steckdosenblock **2'** am Halter **25'** angeschraubt. Der Steckdosenblock **2'** besitzt entsprechend konfigurierte Anschlüsse **20'.** Die Anschlüsse **20'** sind wiederum zum Anschliessen von Kabeln **9** zur Stromversorgung oder Datenübertragung bestimmt.

### Figuren 6, 10A und 10B

An der Strebe **12** lassen sich weitere Bauteile anbringen, nämlich zunächst Haken **3** zur Aufhängung von Kabeln **9** und Manschetten **34** als Kantenschutz zur Durchführung von Kabeln **9** durch die Durchbrüche **123** in den Hohlraum **122** hinein oder aus diesem heraus. An der Strebe **12** lassen sich ferner Adapter **35** anbringen, die zum Andocken eines Kanals **38** für die Führung von Kabeln **9** oder Sammlung von Überlängen von Kabeln **9** dienen.

Die bisher behandelte *erste Ausführungsform* der Kabelführung erleichtert die gesamte Elektrifizierung am Tisch **1** dadurch, dass man am errichteten Untergestell - dieses setzt sich zumindest aus einer Strebe **12** und Tischbeinen **10** zusammen - die Elektroinstallation bei stehendem Untergestell komplett einbauen kann, ohne unterhalb der Tischplatte **13,** d.h. unter dem Tisch **1,** arbeiten zu müssen. Die Verkabelung erfolgt quasi von oben. Erst nach Fertigstellung der Elektroinstallation wird die Tischplatte **13** auf dem Untergestell montiert. Besonders vorteilhaft ist der Montageablauf bei grossen Tischen **1,** die z.B. für Konferenzzwecke vorgesehen sind und an denen daher das Umkehren solcher schwerer, grossflächiger Tische **1** mit den Tischbeinen **10** nach oben - zur erleichterten Zugänglichkeit des Untergestells - praktisch undurchführbar ist. Solche Tische **1** haben in der Regel mehrere aneinanderzufügende Tischplatten **13,** die nach der erfolgten Verkabelung montiert werden. Durch die Verwendung der speziellen Strebe **12** ist es sehr einfach, daran Steckdosenblöcke **2** mittels der Halter **25 -** beides in *erster Variante -* von beiden Seiten anzubringen, so dass von einander gegenüberliegenden Arbeitsplätzen jeweils Zugriff an zugewandte Steckdosenblöcke **2** besteht. Überdies sind die aus Hohlprofil bestehenden Streben **12** mit den systematischen Durchbrüchen **123** zur Durchleitung von Kabeln **9** und dem ein- oder beidseitigen Andocken von Kabel **9** tragenden Haken **3** und Kanälen **38** nutzbar.

### Figuren 7A bis 7K

Der Adapter **35** ist in seiner Grundfläche **359** quadratisch und hat in der Mitte eine Öffnung **355.** An der Seite, die der Strebe **12** im montierten Zustand zugewandt ist, weist der Adapter **35** ein Verriegelungsteil **350** in Form eines umlaufenden Kragens auf, wodurch eine obere Nut **353** und eine untere Nut **354** entsteht. Im Anschluss an die Nuten **353,354** ist die Grundfläche **359** vorhanden. Die obere Nut **353** und die untere Nut **354** besitzen an einer Seite des Kragens einen grösseren Radius an der gegenüberliegenden Seite. Benachbart zur oberen Nut **353,** quasi der Strebe **12** abgewandt, verläuft eine weitere Nut **356,** an deren Oberseite ein erstes Rastelement **351** sitzt. Entgegengesetzt des ersten Rastelements **351** ist ein zweites Rastelement **352** vorgesehen, wobei das zweite Rastelement **352** über das erste Rastelement **351** hervorsteht und die an den beiden Rastelementen **351,352** angeordneten Keilkonturen aufeinander zu gerichtet sind. Zwischen den beiden Rastelementen **351,352** ist eine Ausnehmung **357** vorhanden, in der sich die Öffnung **355** befindet.

Bei der Montage des Adapters **35** an der Strebe **12** ist der Adapter **35** dem Durchbruch **123** zunächst angenähert, dabei sind die beiden Rastelemente **351,352** parallel zu beiden Schmalseiten des Durchbruchs **123** positioniert. Der Adapter **35** wird in dieser Position in den Durchbruch **123** eingefahren, bis das Verriegelungsteil **350** mit seiner Grundfläche **359** an der Strebe **12** anschlägt. Anschliessend wird der Adapter **35** gegen den Uhrzeigersinn um 90° gedreht, was durch den grösseren Radius an jeweils einer Seite des Kragens ermöglicht wird. Eine Drehrichtung im Uhrzeigersinn ist aufgrund der kleineren Radien, die den grösseren Radien gegenüberliegen, nicht möglich. In Endstellung des Adapters **35** sind die beiden Nuten **353,354** in Eingriff mit den beiden längslaufenden Wandungskanten des gewählten Durchbruchs **123.** Somit ist der Adapter **35** an der Strebe **12** fixiert. Die ersten Rastelemente **351** liegen parallel, beabstandet zur Oberseite **124,** wohingegen die zweiten Rastelemente **352** parallel beabstandet zur Unterseite **126** verlaufen.

Der Kanal **38** hat die Form eines länglichen U-Profils mit einem Boden **385,** von dem sich beidseits je ein aufragender Schenkel **384** fortsetzt. Die an ihren freien Enden zueinander gebogenen Schenkeln **384** belassen einen nach oben offenen Zugang **383.** Am rückseitigen Schenkel **384** ist eine erste Kontur **381** in Form einer auskragenden Nase angeordnet. Am Boden **385** befindet sich eine zweite Kontur **382** in Gestalt einer Vertiefung.

Beim Einsetzten des Kanals **38** in die Adapter **35** wird zunächst die erste Kontur **381** des Kanals **38** in die Nut **356** des Adapters **35** eingefahren, wobei das erste Rastelement **351** des Adapters **35** mit seiner Keilkontur die erste Kontur **381** des Kanals **38** noch nicht vollständig hintergreift. Der Boden **385** des Kanals **38** liegt partiell auf dem zweiten Rastelement **352** auf. Beim weiteren Einsetzen des Kanals **38** wird das zweite Rastelement **352** nach unten gebogen, bis die Keilkontur des ersten Rastelements **351** vom Adapter **35** die Kontur **381** des Kanals **38** vollständig hintergreift. Gleichzeitig kommt die Keilkontur am zweiten Rastelement **352** innerhalb der zweiten Kontur **382** am Kanal **38** zu liegen. In Endstellung ist der Kanal **38** aufgrund seiner ersten und zweiten Konturen **381,382,** die in Eingriff mit den Keilkonturen der ersten und zweiten Rastelemente **351,352** des Adapters **35** sind, gegen unbeabsichtigtes Lösen gesichert.

### Figuren 8A bis 9B

Der Haken **3** hat im Prinzip die Form eines U-Profils mit einem Boden **30,** von dem sich rückseitig ein vertikal aufsteigender Steg **31** und frontseitig ein nach oben gekrümmter Schenkel **32** fortsetzen. Am Fortsatz des Bodens **30,** über den Steg **31** hinaus, befinden sich eine untere Rastkontur **300** sowie am Ende eine Keilkontur **301.** Am oberen Ende des Stegs **31** setzt T-förmig ein Quersteg **33** an, an dem sich eine obere Rastkontur **300** sowie am Ende ebenfalls eine Keilkontur **301** befinden. Der Haken **3** hat eine nach oben mündende Öffnung **330,** die von freien Enden des Schenkels **32** und des Querstegs **33** eingeengt wird. Der Fortsatz des Bodens **30** und der Quersteg **33** sind flexibel gestaltet, so dass der Haken **3** in den Durchbruch **123** eingeschoben werden kann, und im eingesetzten Zustand des Hakens **3** die unteren und oberen Rastkonturen **300** in Eingriff mit den beiden längslaufenden Wandungskanten des gewählten Durchbruchs **123** der Strebe **12** sind. Die Keilkonturen **301** ermöglichen ein leichteres Einschieben des Hakens **3** in den gewählten Durchbruch **123** an der Strebe **12.**

Die Manschette **34** besteht aus flexiblem Material und besitzt die Form eines rechteckförmigen Rings mit einer mittigen Aussparung **340.** Äusserlich hat die Manschette **34** eine umlaufende Nut **341,** wodurch die in einen Durchbruch **123** an der Strebe **12** eingesetzte Manschette **34** in Position bleibt. Einschnitte **342** ermöglichen ein leichteres Halbieren der Manschette **34,** sofern diese am Anfang oder Ende der Strebe **20** in einen quasi nur halb vorhandenen Durchbruch **123** einzusetzen ist und man daher nur die Hälfte der Manschette **34** benötigt.

### Figuren 11A bis 17

Anhand der folgenden Figuren wird die *zweite Ausführungsform* der Kabelführung erläutert.

### Figuren 11A bis 11C

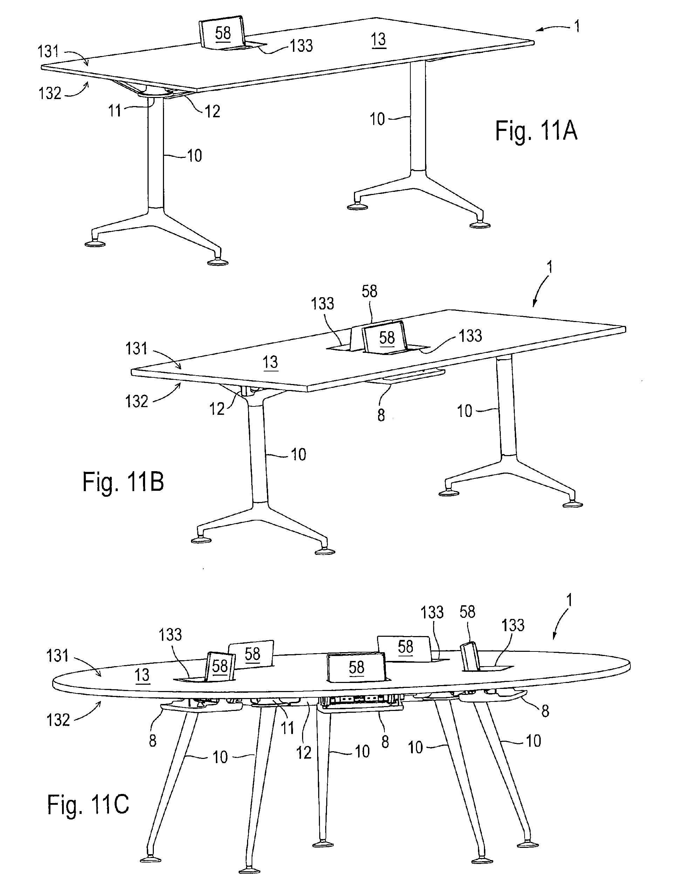

In einer ersten Tischkonfiguration (Figur 11A) ist in der rechteckigen Tischplatte **13** des Tischs **1** nur eine Ausnehmung **133** vorgesehen, die sich mit einem klappbaren Deckel **58** verschliessen lässt. Momentan befindet sich der hochstehende Deckel **58** in der Offenstellung. Durch die Ausnehmung **133** gelangt man an die hier nicht sichtbare Elektroinstallation, insbesondere an die Anschlüsse **20** eines Steckdosenblocks **2** und die damit verbundenen bzw. zu verbindenden Kabel **9.**

In einer zweiten Tischkonfiguration (Figur 11 B) sind in der rechteckigen Tischplatte **13** des Tischs **1,** der zwei gegenüberliegende Arbeitsplätze bietet, zwei zueinander benachbarte Ausnehmungen **133** vorgesehen, welche jeweils mit einem klappbaren Deckel **58** verschlossen werden können. Auch hier gelangt jeder Benutzer von seinem Arbeitsplatz durch die jeweils zugehörige Ausnehmung **133** an die Elektroinstallation, unterhalb der ein Kabelkorb **8** angeordnet ist. Der Kabelkorb **8** dient zur Aufnahme von Kabeln **9** oder Überlängen davon.

In einer dritten Tischkonfiguration (Figur 11C) mit z.B. fünf Arbeitsplätzen hat die Tischplatte **13** des Tischs **1,** welche z.B. rund oder oval ist, entsprechend fünf Ausnehmungen **133,** die jeweils mit einem klappbaren Deckel **58** verschliessbar sind. Jeder Benutzer hat von seinem Arbeitsplatz durch die jeweils zugehörige Ausnehmung **133** Zugang zur Elektroinstallation, unterhalb der ein Kabelkorb **8** angeordnet ist.

### Figur 12

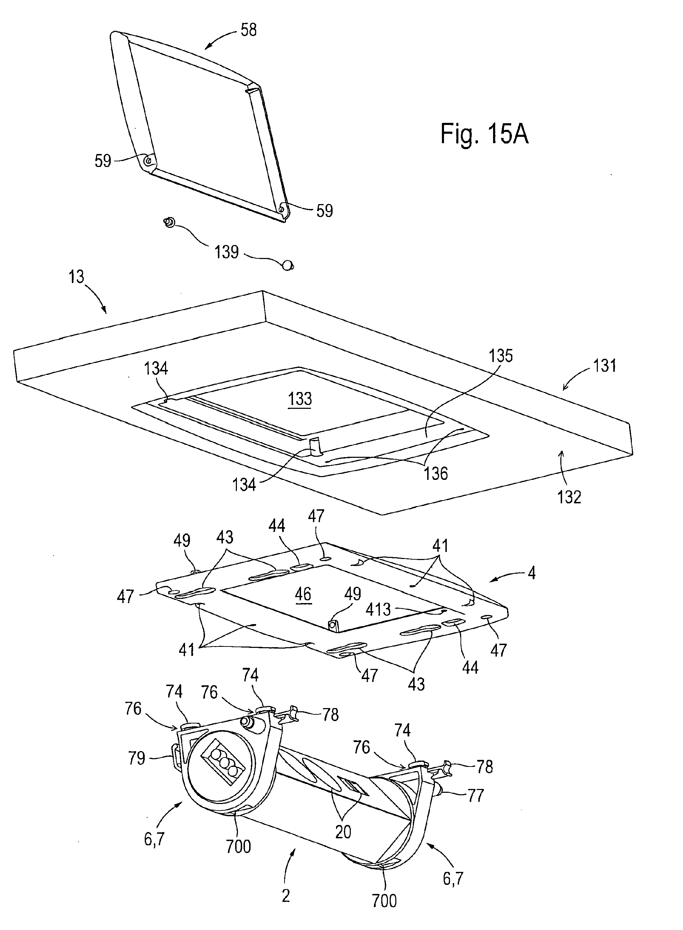

Der dargestellte Ausschnitt der Tischplatte **13** hat die Ausnehmung **133,** in der eine Nut **134** vorhanden ist. Vorgesehen sind ferner ein von der Tischplattenoberseite **131** in die Ausnehmung **133** einsetzbarer oberer Rahmen **5** mit zugehörigem Anschlag **57** sowie ein Deckel **58.** Zur Montage von der Tischplattenunterseite **132** ist ein unterer Rahmen **4** bestimmt, an den sich - zusammengebaut - der Steckdosenblock **2** *erster Variante* sowie die je zwei Endkappen **6** und Lager **7** andocken lassen. Schliesslich gehört ein Kabelkorb **8** zum Gesamtaufbau. Den oberen Rahmen **5** sieht man nur vor, wenn die Flächen der Ausnehmung **133** unbeschichtet sind und aus optischen Gründen daher abgedeckt werden sollen; dies im Gegensatz zu den Figuren 15A-15D.

### Figuren 13A bis 13C

Der Steckdosenblock **2** *erster Variante* ist von rechteckförmiger Gestalt und besitzt mehrere Anschlüsse **20,** die je nach länderspezifischer Norm oder einsatzabhängiger Ausstattung variieren und z.B. nebeneinander an einer Längsseite und/oder gegenüberliegend an den Schmalseiten angebracht sein können. Die zwei Endkappen **6** sind mit jeweils einer Umfassung **62** versehen. Im Anschluss an die Umfassung **62** ist ein Flansch **61** vorgesehen, von dem sich ein Zylinderabschnitt **60** fortsetzt, der mit einer Aussenfläche **63** endet. Zwischen Aussenfläche **63** und Zylinderabschnitt **60** sind eine Verliersicherung **64** und im Übergangsbereich vom Zylinderabschnitt **60** zum Flansch **61** ein Anschlag **65** vorhanden. In der Aussenfläche **63** gibt es Schraubenlöcher **66.**

Vom Lagerring **70** erstreckt sich in radialer Richtung eine erste Stützstrebe **72** und eine zweite Stützstrebe **73,** zwischen denen eine Deckstrebe **71** verläuft. Auf der Deckstrebe **71** ist nahe der ersten und zweiten Stützstrebe **72,73** jeweils ein Zapfen **74** mit einem Hinterschnitt **76** vorhanden. Der Lagerring **70** hat an der Innenseite eine Vertiefung **75.** Im Eckbereich zwischen der Deckstrebe **71** und der ersten Stützstrebe **72** erstreckt sich vom Lager **7** in axialer Richtung zum Lagerring **70** jeweils eine Achse **77.** Die beiden Achsen **77** an den Lagern **7** verlaufen in gegensätzliche Richtungen. Von der ersten Stützstrebe **72** setzt nahe der ersten Deckstrebe **71** ein Rastelement **78** an, wobei von der zweiten Stützstrebe **73** nahe der Deckstrebe **71** ein Haken **79** abgeht, der zur Kabelführung dient.

### Figur 13D

Der obere Rahmen **5** ist ebenfalls von rechteckförmiger Gestalt und hat den Durchgang **56** sowie eine umlaufende Kante **50,** von der sich ein Kragen **51** fortsetzt. Entlang den Längsseiten des Kragens **51** sind Rastnasen **52** vorhanden, die zum komplementären, späteren Eingriff mit den Rastkonturen **41** am unteren Rahmen **4** bestimmt sind. In den Querseiten des Kragens **51,** nahe den Eckbereichen zu einer Längsseite, liegt jeweils eine Ausnehmung **53.** Die Querseiten besitzen eine Umbiegung **54** mit einer darin vorhandenen Aufnahme **55,** in die der zum gedämpften Aufsetzen des Deckels **58** dienende Anschlag **57** einsetzbar ist.

### Figur 13E

Der untere Rahmen **4** ist von rechteckförmiger Gestalt und hat den Durchgang **46.** Vorhanden sind zwei zueinander parallele Längsschenkel **40,** zwischen denen sich zwei parallele Querschenkel **42** erstrecken. Entlang der beiden Längsschenkel **40** sind Rastkonturen **41** vorhanden. Parallel beabstandet zu den Querschenkeln **42** gibt es jeweils zwei hintereinander liegende schlüssellochförmige Freischnitte **43,** zwischen denen ein Anschlag **48** sitzt. Benachbart an jeweils einem Freischnitt **43** ist - ebenso parallel beabstandet zu den Querschenkeln **42 -** eine längliche Führungsnut **44** vorhanden. Zwischen Führungsnut **44** und Durchgang **46** befindet sich eine Aufnahme **45,** in die der Anschlag **57** einsteckbar ist. Schraubennester **47** liegen in den Eckbereichen zwischen den Längsschenkeln **40** und den Querschenkeln **42.** Ein Steg **49** erhebt sich jeweils zwischen der Rastkontur **41** und dem Freischnitt **43** und überragt dabei den Anschlag **48.**

### Figur 13F

Der rechteckförmige Deckel **58** dient zum Verschliessen der Ausnehmung **133** in der Tischplatte **13.** An den Schmalseiten des Deckels **58** ist jeweils ein zueinander fluchtendes Achsloch **59** vorhanden, das der Fixierung des Deckels **58** mittels eines Sicherungselements **139** dient (s. Figur 15A).

### Fiugr 13G

Der Kabelkorb **8** hat einen rechteckigen Boden **80,** von dem sich zwei parallel beabstandete Nocken **81** und ein umlaufender Rand erheben, von dem zwei gegenüberliegende Bügel **82** abgehen. In den Bügeln **82** liegt je ein Achsloch **89,** die zueinander fluchten.

### Figuren 14A und 14B

Dieses Figurenpaar illustriert das Zusammensetzen des Steckdosenblocks **2** *erster Variante* mit den je zwei Endkappen **6** und Lagern **7.** Die Endkappen **6** und Lager **7** haben die Funktion der drehbaren Halterung des Steckdosenblocks **2.**

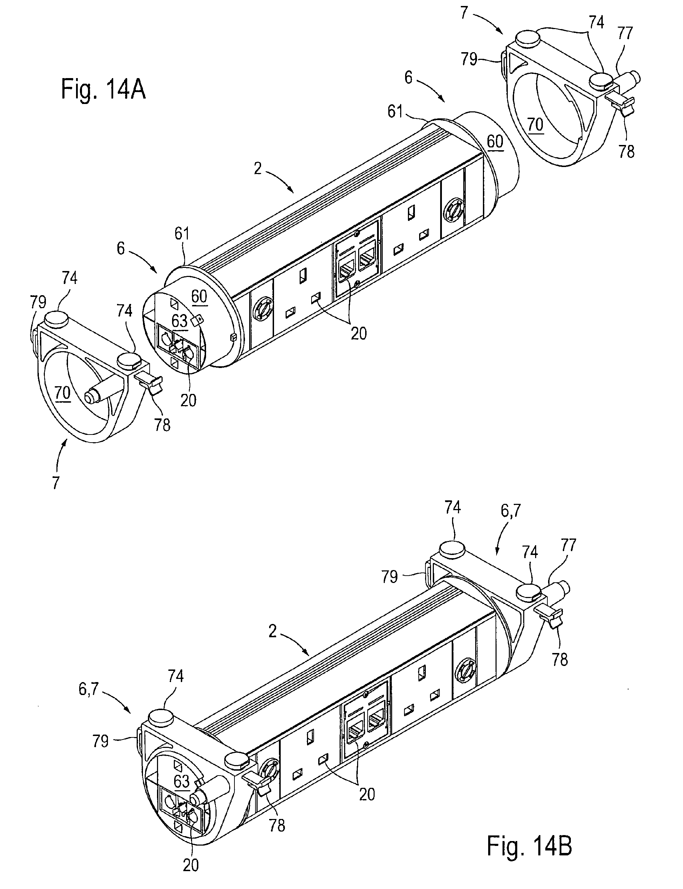

### Figur 14A: 1. Montageschritt

Zuerst wird je eine Endkappe **6** vollständig auf jede der beiden Schmalseiten des Steckdosenblocks **2** aufgeschoben, so dass der Flansch **61** bündig am Steckdosenblock **2** anliegt. Die Umfassung **62** der Endkappe **6** greift in komplementäre Konturen an der entsprechenden Schmalseite des Steckdosenblocks **2** ein. Durch die in der Aussenfläche **63** der Endkappe **6** vorhandenen Schraubenlöcher **66** ist die Endkappe **6** mittels Befestigungselementen an am Steckdosenblock **2** vorhandenen Schraubkanälen fixiert. Die an den Schmalseiten des Steckdosenblocks **2** angeordneten Anschlüsse **20** durchragen axial den Zylinderabschnitt **60** und bilden quasi einen bündigen Abschluss mit der Aussenfläche **63** der Endkappe **6.**

### Figur 14B: 2. Montageschritt

Auf jede Endkappe **6** wird ein Lager **7** aufgeschoben. Die Lager **7** umschliessen dann mit ihrem Lagerring **70** die dazu jeweils axial verlaufenden Zylinderabschnitte **60** der Endkappen **6.** In der Vertiefung **75** des Lagerrings **70** kommt der Anschlag **65** der Endkappe **6** zu liegen, so dass das Verdrehen des Steckdosenblocks **2** mit den damit verbundenen Endkappen **6** innerhalb der später feststehenden Lager **7** auf z.B. 65° begrenzt ist. Die Verliersicherung **64** umgreift partiell den jeweiligen Lagerring **70** und verhindert damit ein unbeabsichtigtes Lösen der Lager **7** von den Endkappen **6.**

### Figuren 15A bis 15D

Diese Figurenfolge zeigt den sukzessiven Einbau des Deckels **58** und des unteren Rahmens **4** in die Ausnehmung **133** der Tischplatte **13** sowie das Andocken der Baueinheit aus Steckdosenblock **2** *erster Variante,* Endkappen **6** und Lagern **7** am zuvor eingebauten unteren Rahmen **4.** Auf den oberen Rahmen **57** kann man hier verzichten, da die Kanten der Ausnehmung **133** mit der Oberfläche der Tischplatte **13** eine Beschichtung - z.B. eine Pulverbeschichtung - aufweisen, so dass auch die Flächen in der Ausnehmung **133** quasi versiegelt sind.

### Figur 15A: 1. Montageshritt

In der Ausgangssituation ist die Ausnehmung **133** unbelegt, der Deckel **58,** der untere Rahmen **4** und der Steckdosenblock **2** mit montierten Endkappen **6** und Lagern **7** sind für die Montage bereitgestellt. An der Tischplattenunterseite **132** ist die Ausnehmung **133** von einer simsartigen Vertiefung **135** umrandet, in der Löcher **136** zur Aufnahme von Befestigungselementen vorgesehen sind.

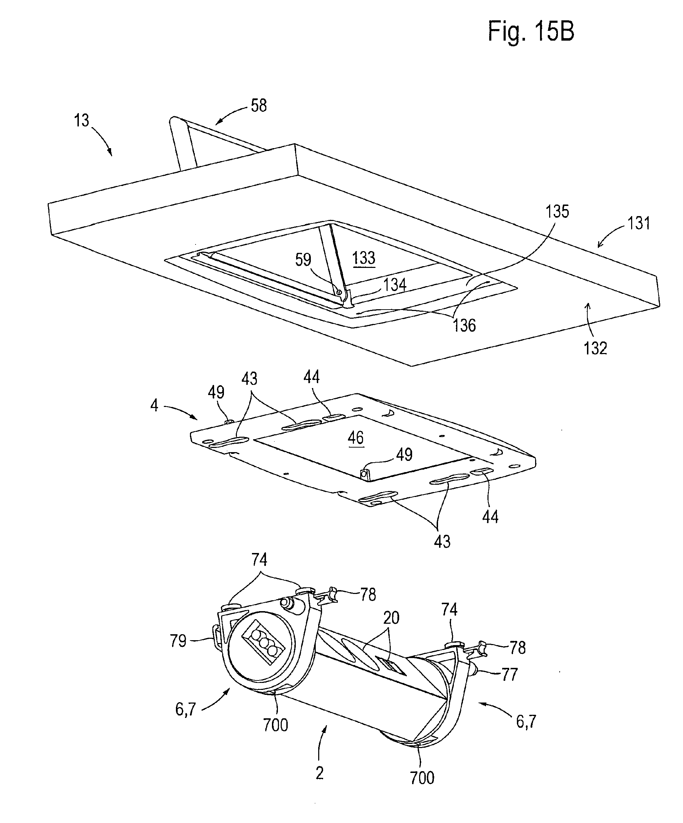

### Figur 15B: 2. Montageschritt

Zunächst wir der Deckel **58** von der Tischplattenoberseite **131** in die Ausnehmung **133** eingesetzt, wobei die Achslöcher **59** des Deckels **58** mit der jeweiligen Nut **134** in der Ausnehmung **133** in Flucht gebracht werden. Der untere Rahmen **4** wird von der Tischplattenunterseite **132** der Ausnehmung **133** angenähert. Die Baueinheit aus Steckdosenblock **2,** Endkappen **6** und Lagern **7** liegt weiterhin in Bereitstellung.

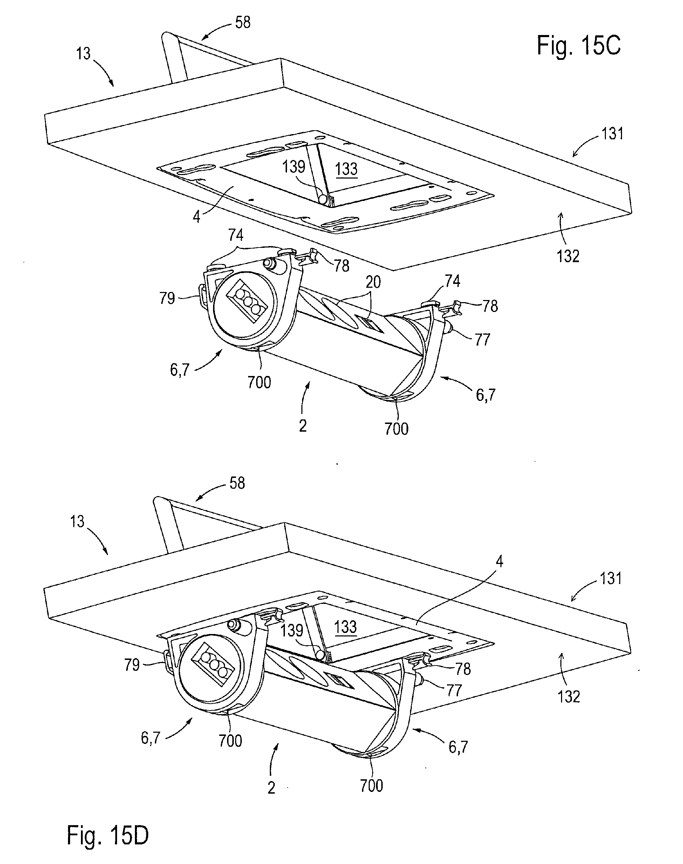

### Figur 15C: 3. Montageschritt

Der untere Rahmen **4** wird von der Tischplattenunterseite **132** in die Vertiefung **135** eingesetzt und ist mittels durch die Schraubennester **47** am unteren Rahmen **4** durchgreifender Befestigungselemente in den Löchern **136** fixiert. Dabei ragt jeweils ein Steg **49** des unteren Rahmens **4** in die benachbarte Nut **134.** Mit dem Sicherungselement **139,** welches das Achsloch **59** im Deckel **58** durchragt und im Steg **49** steckt, ist der Deckel **58** fixiert. Die Baueinheit aus Steckdosenblock **2,** Endkappen **6** und Lagern **7** wird dem unteren Rahmen **4** von der Tischplattenunterseite **132** angenähert, wobei man die Zapfen **74** der Lager **7** auf die Freischnitte **43** ausrichtet.

### Figur 15D: 4. Montageschritt

Abschliessend wird die Baueinheit aus Steckdosenblock **2,** Endkappen **6** und Lagern **7** an den unteren Rahmen **4** angedockt. Die Rastelemente **78** werden mit ihren frei aufragenden Enden in die Führungsnuten **44** eingesetzt, und dabei ragen die Zapfen **74** in die erweiterten Bereiche der Freischnitte **43,** so dass die Wandung des unteren Rahmens **4** auf der Ebene der Hinterschnitte **76** der Zapfen **74** zu liegen kommt. Hiernach wird die Baueinheit mit dem Steckdosenblock **2** verschoben, wobei die Rastelemente **78** zunächst aus den Führungsnuten **44** gedrückt werden, die Zapfen **74** in die verengten Bereiche der Freischnitte **43** einfahren und die die verengten Bereiche der Freischnitte **43** umgebenden Wandungsränder des unteren Rahmens **4** zwischen die Deckstrebe **71** und die Hinterschnitte **76** gelangen. Beim Erreichen der Endstellung springen die federnden Rastelemente **78** in den jeweiligen erweiterten Bereich des benachbarten Freischnitts **43** und stemmen sich dort mit ihren frei aufragenden Enden gegen die Aussenkante des betreffenden Freischnitts **43.** Damit ist die an den unteren Rahmen **4** angedockte Baueinheit aus Steckdosenblock **2,** Endkappen **6** und Lagern **7** arretiert. An der Unterseite hat der Lagerring **70** des Lagers **7** einen Einstich **700,** der zur Limitierung des Schwenkbereichs des Kabelkorbs **8** dient.

Will man die Baueinheit aus Steckdosenblock **2,** Endkappen **6** und Lagern **7** vom unteren Rahmen **4** aus der angedockten Position lösen, werden die Rastelemente **78** so weit nach unten gebogen, bis deren frei aufragende Enden aus den erweiterten Bereichen der Freischnitte **43** gelangen und die Arretierung der angedockten Baueinheit mit dem Steckdosenblock **2** dadurch aufgehoben ist. Nun lässt sich die Baueinheit entgegen der Einschubrichtung bewegen, bis die Zapfen **74** an den Anschlägen **48** am unteren Rahmen **4** anprallen. Jetzt stehen die Zapfen **74** in den erweiterten Bereichen der Freischnitte **43,** so dass man die komplette Baueinheit mit dem Steckdosenblock **2** vom unteren Rahmen **4** lösen kann. Die Anschläge **48** verhindern, dass die Zapfen **74** über die Löseposition hinaus zu weit geschoben werden und mit ihren Hinterschnitten **76** am unteren Rahmen **4** verklemmen.

### Figuren 16A bis 16D

In dieser Figurenfolge werden an einer Tischplatte **13** einzelne oder paarweise Aussparungen **133** sowie zugeordnete Bauteile und Baueinheiten in variierender Anordnung zu den Streben **12** dargestellt, welche Bestandteil des die Tischplatte **1** tragenden Untergestells sind. Stets sind ein unterer Rahmen **4,** ein momentan hochgeklappter Deckel **58** und eine Baueinheit aus Steckdosenblock **2** *erster Variante,* Endkappen **6** und Lagern **7** vorhanden. An den Beispielen wird davon ausgegangen, dass man jeweils einen oberen Rahmen **5** verwendet. Der obere Rahmen **5** kleidet die Ausnehmung **133** aus, überdeckt deren umlaufende Kante, welche an der Tischplattenoberseite **131** mündet, und stellt somit einen optisch einwandfreien Abschluss her.

Nach dem Einsetzen des unteren Rahmens **4** in die Ausnehmung **133** (Figuren 15A bis 15D) wird der obere Rahmen **5** von der Tischplattenoberseite **131** in die Ausnehmung **133** eingeführt. Hierbei schnappen die Rastnasen **52** des oberen Rahmens **5** in die Rastkonturen **41** des unteren Rahmens **4** ein, wodurch der obere Rahmen **5** fixiert ist. Der Anschlag **57** wird durch die Aufnahme **55** im oberen Rahmen **5** gesteckt und durchgreift die dazu fluchtende Aufnahme **45** im unteren Rahmen **4.** Man setzt pro Deckel **58** einen oder mehrere Anschläge **57** zur Geräuschdämpfung bei beabsichtigtem oder ungewolltem Schliessen des Deckels **58** ein. Ist der obere Rahmen **5** verzichtbar, wird der Anschlag **57** nur in der Aufnahme **45** im unteren Rahmen fixiert.

Die Aufhängung des Kabelkorbs **8** ist bei allen Varianten identisch. Die freien verjüngten Enden der Achsen **77** der beiden auf den Endkappen **6** sitzenden Lager **7** durchragen die Achslöcher **89** in den beiden sich vom tablettartigen Boden **80** des Kabelkorbs **8** erhebenden Bügeln **82,** so dass der Kabelkorb **8** zwischen den Achsen **77** schwenkbar aufgehängt ist. Die vom Boden **80** des Kabelkorbs **8** aufragenden Nocken **81** greifen in die Einstiche **700** an der Unterseite der Lagerringe **70** der feststehenden Lager **7** ein, so dass eine zusätzliche seitliche Führung und zugleich eine Begrenzung des Schwenkbereichs für den Kabelkorb **8** gebildet werden.

### Figur 16A

Für die Kabelführung am Tisch **1** mit z.B. nur einem Arbeitsplatz sind hinter einer Strebe **12** eine einzelne Ausnehmung **133** in der Tischplatte **13** mit den zugehörigen Bauteilen und der Baueinheit aus Steckdosenblock **2,** Endkappen **6** und Lagern **7** vorgesehen.

### Figur 16B

Hier sind für die Kabelführung am Tisch **1** vor einer Strebe **12** eine einzelne Ausnehmung **133** in der Tischplatte **13** mit den zugehörigen Bauteilen und der Baueinheit aus Steckdosenblock **2,** Endkappen **6** und Lagern **7** angeordnet.

### Figur 16C

Für die Kabelführung an einem Tisch **1** mit z.B. zwei Arbeitsplätzen sind paarweise einander gegenüberliegende Ausnehmungen **133** in der Tischplatte **13** vorgesehen, nämlich spiegelsymmetrisch zu einer dazwischen verlaufenden Strebe **12.** Jede Ausnehmung **133** ist mit den jeweils zugehörigen Bauteilen und einer Baueinheit aus Steckdosenblock **2,** Endkappen **6** und Lagern **7** bestückt.

### Figur 16D

Hier sind für die Kabelführung am Tisch **1** mit wiederum z.B. zwei Arbeitsplätzen paarweise einander gegenüberliegende Ausnehmungen **133** in der Tischplatte **13** vorgesehen, nämlich zwischen zwei zueinander parallel beabstandeten Streben **12.** Jede Ausnehmung **133** ist mit den jeweils zugehörigen Bauteilen und einer Baueinheit aus Steckdosenblock **2,** Endkappen **6** und Lagern **7** bestückt.

Gleichermassen erleichtert auch die *zweite Ausführungsform* der Kabelführung die gesamte Elektrifizierung am Tisch **1** dadurch, dass man am stehenden Untergestell die Elektroinstallation komplett montieren kann. Die Verkabelung erfolgt wieder bei noch nicht aufgesetzten Tischplatten **13** quasi von oben. Erst nach Fertigstellung der Elektroinstallation werden die Tischplatte **13** oder eine Vielzahl davon mit den zuvor angebrachten Basisteilen **4** auf dem Untergestell montiert. Danach bedarf es nur mehr des Andockens der Baueinheiten aus Steckdosenblöcken **2** *erster Variante*, Endkappen **6** und Lagern **7** an den Basisteilen **4,** welche z.B. als untere Rahmen **4** ausgebildet sind. Durch die mit einem Deckel **58** abdeckbaren Ausnehmungen **133** in der Tischplatte **13** gelangt jeder Nutzer an einen begrenzt drehbaren Steckdosenblock **2.** Auch hier sind die aus Hohlprofil bestehenden Streben **12** mit dem Raster von Durchbrüchen **123** zur Durchleitung von Kabeln **9** und dem ein- oder beiseitigen Andocken von Kabel **9** tragenden Haken **3** und Kanälen **38** nutzbar. Damit ist eine montage- und benutzerfreundliche Kabelführung am Tisch **1** unter Beachtung ästhetischer Aspekte geschaffen.

### Figur 17

Auch bei der *zweiten Ausführungsform* der Kabelführung kann der Steckdosenblock **2'** *zweiter Variante* eingesetzt werden. Hierzu verwendet man den Halter **25"** *dritter Variante*. Der Halter **25"** hat eine Schrägfläche **253,** von deren Oberkante sich beidseits je eine Winkelstrebe **254** erstreckt, die eine Seitenfläche **255** besitzt. Von jeder Seitenfläche **255** geht horizontal ein Achsstift **257** ab, der in das jeweilige Achsloch **89** des Kabelkorbs **8** greift und zu dessen Aufhängung dient. Der Steckdosenblock **2'** wird zunächst an der Schrägfläche **253** am Halter **25"** mittels Schrauben **258** befestigt. Schliesslich wird der den Steckdosenblock **2'** tragende Halter **25"** mit Schrauben **259** am unteren Rahmen **4** bzw. an der Unterseite **132** der Tischplatte **13** fixiert. Der obere Rahmen **5** wird wiederum nur vorgesehen, wenn die Flächen der Ausnehmung **133** unbeschichtet sind und aus optischen Gründen daher abgedeckt werden sollen.

## Patentansprüche

1. Kabelführung an einem Tisch (**1**) mit:
a) einer von einem Untergestell (**10,11,12**) getragenen Tischplatte (**13**), welche eine Tischplattenoberseite (**131**) als Arbeitsfläche und eine Tischplattenunterseite (**132**) aufweist;
b) einem Steckdosenblock (**2,2'**), an den Elektrokabel (**9**) für die Stromversorgung und/oder Informationstechnik herangeführt sind und der Anschlüsse (**20,20'**) zum Einstecken von Elektrokabeln (**9**) für die Stromentnahme und/oder Verbindung mit Geräten der Informationstechnik besitzt, **dadurch gekennzeichnet, dass**
c) am Steckdosenblock (**2,2'**) Andockmittel (**25,25',25";28,29;258,259;7,74**) angeordnet sind, die ein lösbares Anhängen des Steckdosenblocks (**2,2'**) am Untergestell (**10,11,12**) oder an einem Basisteil (**4**) erlauben, welches benachbart zu einer in der Tischplatte (**13**) vorgesehenen Ausnehmung (**133**) angeordnet ist.

2. Kabelführung nach Anspruch 1, **dadurch gekennzeichnet, dass**
a) die Andockmittel (**25,25';28,29**) für den Steckdosenblock (**2,2'**) einen Halter (**25,25'**) zur Aufnahme des Steckdosenblocks (**2,2**') und Befestigungselemente (**28,29**) zur lösbaren Verbindung des Halters (**25,25'**) mit dem Untergestell (**10,11,12**) umfassen; und
b) der Halter (**25**) mit Rastorganen (**251**) versehen ist, die an Komplementärkonturen am Steckdosenblock (**2**) angreifen, wodurch der Halter (**25**) und der Steckdosenblock (**2**) lösbar miteinander verbunden sind; oder
c) der Steckdosenblock (**2**') mittels Schrauben (**258**) an den Halter (**25**') angeschraubt ist.

3. Kabelführung nach zumindest einem der Ansprüche 1 und 2, **dadurch gekennzeichnet, dass** die Befestigungselemente (**28,29**) drehbare Riegel (28) zum Eingreifen am Untergestell (**10,11,12**) und Verbindungsorgane (**29**) zur Befestigung der Riegel (**28**) am Halter (**25,25'**) umfassen.

4. Kabelführung nach zumindest einem der Ansprüche 1 bis 3, **dadurch gekennzeichnet, dass**
a) die Riegel (**28**) zum Eingreifen in eine Strebe (**12**) als Bestandteil des Untergestells (**10,11,12**) bestimmt sind;
b) die Strebe (**12**) ein Hohlprofil mit einem Raster von Durchbrüchen (**123**) ist; und
c) die Riegel (**28**) innerlich der Strebe (**12**) hinter Durchbrüchen (**123**) zu liegen kommen.

5. Kabelführung nach zumindest einem der Ansprüche 1 bis 4, **dadurch gekennzeichnet, dass**
a) die Strebe (**12**) ein Vierkanthohlprofil ist, welches eine Oberseite (**124**), eine Unterseite und zwei Seitenflächen aufweist;
b) die Durchbrüche (**123**) in beiden Seitenflächen zueinander kongruent vorgesehen sind; und
c) die Strebe (**12**) einen Hohlraum (**122**) besitzt, wobei dieser und die Durchbrüche (**123**) zur Durchführung von Kabeln (**9**) nutzbar sind.

6. Kabelführung nach zumindest einem der Ansprüche 1 bis 5, **dadurch gekennzeichnet, dass**
a) die Enden der Strebe (**12**) als Andockteile (**120**) zur Verbindung mit Kupplungsteilen (**11**) als eine nächste Komponente des Untergestells ausgebildet sind; und
b) die Kupplungsteile (**11**) zugleich zum Anbau von Tischbeinen (**10**) als eine weitere Komponente des Untergestells nutzbar sind.

7. Kabelführung nach zumindest einem der Ansprüche 1 bis 6, **dadurch gekennzeichnet, dass**
a) Haken (**3**) zum Einhängen in die Durchbrüche (**123**) der Strebe (**12**) als Träger für die Kabel (**9**) vorgesehen sind;
b) Adapter (**35**) als Träger für einen Kanalabschnitt (**38**) vorgesehen sind, in welchem sich Kabel (**9**) führen lassen;
c) die Adapter (**35**) innerlich der Strebe (**12**) hinter den Durchbrüchen (**123**) zu liegen kommen und sich durch Drehen arretieren lassen; und
d) Manschetten (**34**) als Umrandung der Durchbrüche (**123**) zum Kantenschutz durchgeführter Kabel (**9**) vorgesehen sind.

8. Kabelführung nach Anspruch 1, **dadurch gekennzeichnet, dass**
a) die Andockmittel (**7,74**) für den Steckdosenblock (**2**) mit diesem verbundene Lager (**7**) und daran angeordnete Befestigungselemente (**74,76**) umfassen;
b) das Basisteil (**4**) als ein die Ausnehmung (**133**) an der Tischplattenunterseite (**132**) umrandender Rahmen (**4**) gestaltet ist; und
c) das Basisteil (**4**) Gegenkonturen (**43**) besitzt, die mit den Befestigungselementen (**74,76**) der Lager (**7**) zusammenwirken.

9. Kabelführung nach Anspruch 8, **dadurch gekennzeichnet, dass**
a) am Steckdosenblock (**2**) beidseits je ein Seitenstück (**6**) fest angeordnet ist, an dessen Aussenfläche ein weiterer Anschluss (**20**) zum Einstecken von Elektrokabeln (**9**) für die Stromentnahme und/oder -einspeisung und/oder die Verbindung mit Geräten der Informationstechnik zugänglich sein kann; und
b) die Seitenstücke (**6**) in den Lagern (**7**) begrenzt drehbar geführt sind.

10. Kabelführung nach zumindest einem der Ansprüche 8 und 9, **dadurch gekennzeichnet, dass**
a) die Befestigungselemente (**74,76**) an einem Lager (**7**) zumindest einen frei endenden Zapfen (**74**) und einen daran vorgesehenen Hinterschnitt (**76**) umfassen;
b) die Gegenkonturen (**43**) am Basisteil (**4**) als schlüssellochförmige Freischnitte (**43**) mit je einem erweiterten und einem daran anschliessenden verengten Bereich ausgebildet sind; und
c) beim Andocken des Steckdosenblocks (**2**) an das Basisteil (**4**) die Zapfen (**74**) zunächst in die erweiterten Bereiche der Gegenkonturen (**43**) einfahren und die Zapfen (**74**) im angedockten Endzustand in den verengten Bereichen der Gegenkonturen (**43**) zu liegen kommen, wobei Wandungsränder des Basisteils (**4**) in die Hinterschnitte (**76**) an den Zapfen (**74**) eingreifen.

11. Kabelführung nach zumindest einem der Ansprüche 8 bis 10, **dadurch gekennzeichnet, dass**
a) die Befestigungselemente (**74,76**) an einem Lager (**7**) und die Gegenkonturen (**43**) am Basisteil (**4**) jeweils paarweise vorhanden sind; und
b) am Lager (**7**) ein Arretierorgan (**78**) vorgesehen ist, zu dem im Basisteil (**4**) der erweiterte Bereich der Gegenkontur (**43**) als Komplementärorgan dient, die im angedockten Endzustand miteinander lösbar in Eingriff sind.

12. Kabelführung nach Anspruch 11, **dadurch gekennzeichnet, dass** das Arretierorgan (**78**) am Lager (**7**) ein elastisch biegbarer Steg mit einer hochstehenden Nase ist.

13. Kabelführung nach zumindest einem der Ansprüche 1, 8 und 9 bis 12, **dadurch gekennzeichnet, dass**
a) an der Tischplattenunterseite (**132**) eine die Ausnehmung (**133**) umlaufende Vertiefung (**135**) zum Einsetzen des Basisteils (**4**) vorhanden ist;
b) ein von der Tischplattenoberseite (**131**) in die Ausnehmung (**133**) einsetzbarer oberer Rahmen (**5**) vorgesehen ist; und
c) die Ausnehmung (**133**) sich mit einem nach oben herausklappbaren Deckel (58) abdecken lässt.

14. Kabelführung nach Anspruch 1, **dadurch gekennzeichnet, dass**
a) die Andockmittel (**25",259**) für den Steckdosenblock (**2'**) einen Halter (**25"**) zur Aufnahme des Steckdosenblocks (**2'**) und Befestigungselemente (**258,259**) umfassen;
b) der Steckdosenblock (**2'**) mittels Schrauben (**258**) an den Halter (**25"**) angeschraubt ist;
c) das Basisteil (**4**) als ein die Ausnehmung (**133**) an der Tischplattenunterseite (**132**) umrandender Rahmen (**4**) gestaltet ist; und
d) der Halter (**25"**) mittels Schrauben (**259**) am Basisteil (**4**) lösbar befestigt ist.

15. Kabelführung nach zumindest einem der Ansprüche 1 und 14, **dadurch gekennzeichnet, dass** der Halter (**25"**) besitzt:
a) eine Schrägfläche (**253**) zum Aufsetzen des Steckdosenblocks (**2'**);
b) beidseits von der Oberkante der Schrägfläche (**253**) eine sich jeweils erstreckende Winkelstrebe (**254**), deren Oberseite zum Ansetzen an den Rahmen (**4**) bestimmt ist und die jeweils eine Seitenfläche (**255**) hat; und
c) je einen sich von jeder Seitenfläche (**255**) erstreckenden Achsstift (**257**),
wobei die Achsstifte (**257**) zur Aufhängung eines Kabelkorbs (**8**) dienen.
